# EUROPEAN PATENT APPLICATION

(11) **EP 4 592 732 A1**
(43) Date of publication of application: **30.07.2025**
(21) Application number: 23868669.5
(22) Date of filing: 22.09.2023
(51) Int. Cl.: G02B 27/00, G02B 7/02, G02B 27/09, G02B 27/01, G02B 27/28

(54) **OPTICAL DEVICE AND ELECTRONIC DEVICE COMPRISNG SAME**

(30) Priority: 23.09.2022 KR 20220120683; 23.09.2022 KR 20220120684
(71) Applicant: LG INNOTEK CO. LTD, Gangseo-gu Seoul 07796 (KR)
(72) Inventor: SEO, Eun Seong, Seoul 07796 (KR); KO, Joong Yeol, Seoul 07796 (KR); KIM, Ji Sung, Seoul 07796 (KR); LEE, Tae Hoon, Seoul 07796 (KR)
(74) Representative: Plasseraud IP
(86) International application number: PCT/KR2023/014565
(87) International publication number: WO 2024/063618

(57) **Abstract**

Disclosed in an embodiment is an optical device comprising: a barrel on which an outer lens is arranged; a light guide arranged in the barrel; a lens connected to the light guide; and a light source for emitting light through the light guide, wherein the distance between the light guide and the lens is shorter than the distance between the light source and the lens.

## Description

### [Technical Field]

Embodiments relate to an optical device and an electronic device including the same.

### [Background Art]

Virtual reality (VR) refers to a specific environment, situation, or technology itself that resembles reality created by artificial technologies using computers or the like but is not real.

Augmented reality (AR) refers to a technology that combines virtual objects or information with a real environment to make it look like objects existing in the original environment.

Mixed reality (MR) or hybrid reality refers to the merging of the virtual worlds and real worlds to create new environments or new information. In particular, when referring to real-time interactions between objects present in the real world and those in a virtual space, the real-time interactions are referred to as mixed reality.

At this time, the created virtual environment, situation, or the like stimulates the user's five senses and enables spatial and temporal experiences similar to those of the real world, thereby enabling traversal of the boundary between reality and imagination. In addition, users can not only immerse themselves in such environments but also interact with the elements realized in such environments, such as adding operations and providing instructions using devices existing in the real space.

Recently, research on equipment (including gears and devices) used in this field of technology has been actively conducted. However, there is an increasing demand for miniaturization and high resolution in such equipment.

### [Disclosure]

### [Technical Problem]

Embodiments relate to providing an optical device and an electronic device including the same, which are used in augmented reality (AR) and in which a lens is disposed closer to a light guide than a light source, thereby enabling easier miniaturization of the optical device and the electronic device.

Embodiments are also directed to providing an optical device and an electronic device with improved reliability and easier optical axis alignment.

Embodiments are also directed to providing an optical device and an electronic device having improved light efficiency through a second light guide.

Embodiments are also directed to providing an optical device and an electronic device having further enhanced light efficiency by including a birefringent member.

Embodiments are also directed to providing an optical device and an electronic device that are more compact and exhibit improved optical uniformity.

Embodiments are also directed to providing an optical device with improved resolution and an electronic device including the same.

Embodiments are also directed to providing an optical device with improved reliability and an electronic device including the same.

Embodiments are also directed to providing an optical device that is easy to inspect and has improved coupling strength and durability, and an electronic device including the same.

Objectives to be solved by the embodiment are not limited to the above-described objective and will include objectives and effectiveness which may be identified by solutions for the objectives and the embodiments described below.

### [Technical Solution]

An optical device according to an embodiment includes a barrel on which an outer lens is disposed, a light guide disposed in the barrel, a lens connected to the light guide, and a light source configured to emit light to the light guide, wherein a distance between the light guide and the lens is less than a distance between the light source and the lens.

The light guide may be in contact with the lens.

The distance between the lens and the light source may be less than a length of the light guide.

The number of the lenses may correspond to the number of the light sources.

The optical device may include a first spacer in contact with the outer lens, and a second spacer in contact with the light guide.

A size of the second spacer may be greater than a size of the light guide, and less than a sum of the size of the light guide and a size of the lens.

A size of the second spacer may be greater than a sum of a size of the lens and a size of the light guide.

The light guide may include at least one prism.

The light guide may include an X-prism.

The optical device may include a housing surrounding the barrel, wherein the light source may be disposed in the housing.

The barrel may include a first groove in which the outer lens is disposed and a second groove in which the light guide is disposed.

The first groove and the second groove may be disposed to be spaced apart from each other.

An inner side surface of the second groove in the barrel may include a barrel groove convex outward.

An inner side surface of the barrel may include a barrel protrusion protruding toward the light guide.

A size of the barrel protrusion may be less than a size of the light guide.

The size of the lens may be less than the size of the light guide.

The lens may convex toward the light source.

An optical device according to an embodiment includes: a plurality of lenses; a barrel in which the plurality of lenses are disposed; a first light guide disposed in the barrel; an opening formed in a side surface of the barrel; and a light source device coupled to the opening, wherein the light source device includes: a housing in which an opening is formed; a light source disposed in the housing and configured to emit light; and a second light guide disposed between the first light guide and the light source.

The light may be unpolarized light.

The second light guide may reflect light transmitted through the first light guide.

The light source device may include a light source lens disposed between the light source and the second light guide.

The optical device may include a third light guide disposed in the housing.

The third light guide may be disposed between the light source and the first light guide.

The light source may emit the light toward the third light guide.

The third light guide may include a non-polarizing prism.

The light source device may include a birefringent member disposed in the housing.

The light source device may include a light source lens disposed between the light source and the second light guide, and the birefringent member may be disposed between the light source lens and the light source.

The light source lens may be disposed between the birefringent member and the second light guide.

The light source device may include a light source lens disposed between the light source and the second light guide, and the birefringent member may be disposed between the light source lens and the light source or between the second light guide and the light source lens.

The birefringent member may perform phase delay on the light.

The birefringent member may be disposed on an inner side surface of the housing.

The first light guide may include a polarized light separation member configured to reflect first polarized light and transmit second polarized light.

### [Advantageous Effects]

Embodiments can implement an optical device and an electronic device including the same, which are used in augmented reality (AR) and in which a lens is disposed closer to a light guide than a light source, thereby enabling easier miniaturization of the optical device and the electronic device.

Further, it is possible to implement an optical device and an electronic device with improved reliability and easier optical axis alignment.

Further, it is possible to implement an optical device and an electronic device having improved light efficiency through a second light guide.

Further, it is possible to implement an optical device and an electronic device having further enhanced light efficiency by including a birefringent member.

Further, it is possible to implement an optical device and an electronic device that are more compact and exhibit improved optical uniformity.

Further, it is possible to implement an optical device with improved resolution and an electronic device including the same.

Further, it is possible to implement an optical device with improved reliability and an electronic device including the same.

Further, it is possible to implement an optical device that is easy to inspect and has improved coupling strength and durability, and an electronic device including the same.

Various advantages and effects of the present invention are not limited to the above description and can be more easily understood through the description of specific exemplary embodiments of the present invention.

### [Description of Drawings]

FIG. 1 is a conceptual diagram illustrating an embodiment of an artificial intelligence (AI) device.
FIG. 2 is a block diagram illustrating a configuration of an extended reality electronic device according to an embodiment of the present invention.
FIG. 3 is a perspective view of an augmented reality electronic device according to a first embodiment of the present invention.
FIGS. 4 to 6 are conceptual diagrams for describing various display methods applicable to a display unit according to the embodiment of the present invention.
FIG. 7 is a perspective view of an optical device according to one embodiment.
FIG. 8 is an exploded perspective view of the optical device according to one embodiment.
FIG. 9 is a perspective view of a barrel in the optical device according to one embodiment.
FIG. 10 is a side view of the barrel in the optical device according to one embodiment.
FIG. 11 is a bottom view of the barrel, into which the light guide is inserted, in the optical device according to one embodiment.
FIG. 12 is a view illustrating a coupling of an outer lens, a first spacer, a light guide, a lens, and a second spacer to the barrel in the optical device according to one embodiment.
FIG. 13 is a view illustrating a coupling between the barrel, a housing, and an additional housing in the optical device according to the embodiment.
FIG. 14 is a view illustrating a coupling between the housing and a light source unit in the optical device according to the embodiment.
FIG. 15 is a cross-sectional view taken along line AA' in FIG. 7.
FIG. 16 is an enlarged view of portion K1 in FIG. 15.
FIG. 17 is a bottom view of the barrel, the light guide, and the lens in the optical device according to one embodiment.
FIG. 18 is a view further including the second spacer based on FIG. 17.
FIG. 19 is a cross-sectional view of an optical device according to another embodiment.
FIG. 20 is a conceptual diagram of an optical device according to still another embodiment.
FIG. 21 is a perspective view of the optical device according to still another embodiment.
FIG. 22 is an exploded perspective view of the optical device according to still another embodiment.
FIG. 23 is a cross-sectional view taken along line BB' in FIG. 21.
FIG. 24 is an enlarged view of portion K1 in FIG. 23.
FIG. 25 is an enlarged view of portion K2 in FIG. 23.
FIG. 26 is an enlarged view of portion K2 in FIG. 23A.
FIG. 27A is a cross-sectional view of a light source device in an optical device according to yet another embodiment.
FIG. 27B is a modified example of FIG. 27A.
FIG. 27C is another modified example of FIG. 27A.
FIG. 27D is still another modified example of FIG. 27A.
FIG. 28A is a cross-sectional view of a light source device in an optical device according to yet another embodiment.
FIG. 28B is a modified example of FIG. 28A.
FIG. 29A is a cross-sectional view of a light source device in an optical device according to yet another embodiment.
FIG. 29B is a modified example of FIG. 29A.
FIG. 29C is another modified example of FIG. 29A.

### [Modes of the Invention]

Hereinafter, exemplary embodiments of the present invention will be described in detail with reference to the accompanying drawings.

However, the technical spirit of the present invention is not limited to some embodiments which will be described and may be implemented in various forms, and one or more elements in the embodiments may be selectively combined and replaced to be used within the scope of the technical spirit of the present invention.

Further, the terms used in the embodiments of the present invention (including technical and scientific terms), may be interpreted with meanings that are generally understood by those skilled in the art unless particularly defined and described, and terms which are generally used, such as terms defined in a dictionary, may be understood in consideration of their contextual meanings in the related art.

Further, the terms used in the embodiments of the present invention are provided only to describe embodiments of the present invention and not for purposes of limitation.

In the present specification, unless clearly indicated otherwise by the context, singular forms include the plural forms thereof, and in a case in which "at least one (or one or more) among A, B, and C" is described, this may include at least one combination among all combinations which can be combined with A, B, and C.

In addition, terms such as first, second, A, B, (a), (b), and the like may be used to describe components of the embodiments of the present invention.

These terms are only provided to distinguish the components from other components, and the essence, sequence, order, or the like of the components are not limited by the terms.

In addition, when a component is described as being "connected," "coupled," or "linked" to another component, the component may include not only a case of being directly connected, coupled, or linked to another component but also a case of being connected, coupled, or linked to another element by still another component between the component and another component.

Further, when a component is described as being formed "on (above)" or "under (below)" another component, the term "on (above)" or "under (below)" includes both of a case in which two components are in direct contact with each other or a case in which one or more components are (indirectly) disposed between two components. In addition, when a component is described as being disposed "on or under" another component, such a description may include a case in which the component is disposed at an upper side or a lower side with respect to another component.

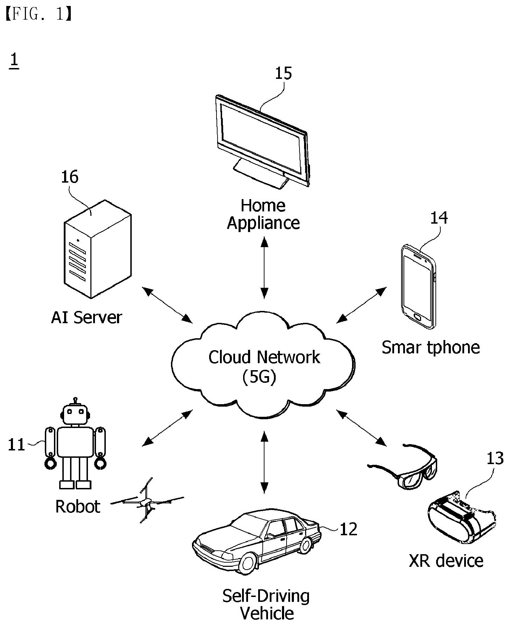

FIG. 1 is a conceptual diagram illustrating an embodiment of an artificial intelligence (AI) device.

Referring to FIG. 1, in an AI system, at least one of an AI server 16, a robot 11, an autonomous vehicle 12, an extended reality (XR) device 13, a smartphone 14, and home appliances 15 is connected to a cloud network 10. Here, the robot 11, the autonomous vehicle 12, the XR device 13, the smartphone 14, the home appliances 15, and the like to which an AI technology is applied may be referred to as AI devices 11 to 15.

The cloud network 10 may constitute a part of cloud computing infrastructure or may mean a network present within cloud computing infrastructure. Here, the cloud network 10 may be configured using the 3G network, the 4G or long term evolution (LTE) network, the 5G network, or the like.

That is, the devices 11 to 16 constituting the AI system may be interconnected through the cloud network 10. In particular, the devices 11 to 16 may communicate with each other through a base station, but may directly communicate with each other without going through the base station.

The AI server 16 may include a server configured to perform AI processing and a server configured to perform calculation on big data.

The AI server 16 is connected to at least one of the robot 11, the autonomous vehicle 12, the XR device 13, the smartphone 14, and the home appliances 15, that are AI devices constituting the AI system, through the cloud network 10, and may help at least some of the AI processing of the connected AI devices 11 to 15.

In this case, the AI server 16 may train an artificial neural network based on a machine learning algorithm instead of the AI devices 11 to 15, and may directly store a learning model or transmit the learning model to the AI devices 11 to 15.

In this case, the AI server 16 may receive input data from the AI devices 11 to 15, may infer a result value of the received input data using the learning model, may generate a response or a control command based on the inferred result value, and may transmit the response or control command to the AI devices 11 to 15.

Alternatively, the AI devices 11 to 15 may directly infer a result value of input data using a learning model, and may generate a response or a control command based on the inferred result value.

### <AI+Robot>

An AI technology is applied to the robot 11, and the robot 11 may be implemented as a guide robot, a transport robot, a cleaning robot, a wearable robot, an entertainment robot, a pet robot, an unmanned flight robot, and the like.

The robot 11 may include a robot control module for controlling an operation, and the robot control module may mean a software module or a chip in which the software module is implemented as hardware.

The robot 11 may obtain state information of the robot 11, may detect (recognize) a surrounding environment and an object, may generate map data, may determine a moving path and a driving plan, may determine a response to a user interaction, or may determine an operation using sensor information obtained from various types of sensors.

Here, the robot 11 may use sensor information obtained by at least one sensor of a LiDAR, a radar, and a camera in order to determine the moving path and the driving plan.

The robot 11 may perform the above-described operations using a learning model configured with at least one artificial neural network. For example, the robot 11 may recognize a surrounding environment and an object using a learning model, and may determine an operation using recognized surrounding environment information or object information. Here, the learning model may be directly trained in the robot 11 or may be trained in an external device, such as the AI server 16.

In this case, the robot 11 may directly generate results using the learning model and perform an operation, but may perform an operation by transmitting sensor information to an external device, such as the AI server 16, and receiving results generated in response thereto.

The robot 11 may determine a moving path and a driving plan using at least one of map data, object information detected from sensor information, and object information obtained from an external device, and drive along the determined moving path and driving plan by controlling a driving unit.

The map data may include object identification information for various objects disposed in a space in which the robot 11 moves. For example, the map data may include object identification information for fixed objects, such as a wall and a door, and movable objects, such as a flowerpot and a desk. In addition, the object identification information may include a name, a type, a distance, a position, and the like.

Further, the robot 11 may perform an operation or drive by controlling the driving unit based on a user's control/interaction. In this case, the robot 11 may obtain intention information of an interaction according to a user's behavior or voice utterance, may determine a response based on the obtained intention information, and may perform an operation.

### <AI+Autonomous Driving>

An AI technology is applied to the autonomous vehicle 12, and the autonomous vehicle 12 may be implemented as a movable type robot, a vehicle, an unmanned aerial vehicle, or the like

The autonomous vehicle 12 may include an autonomous driving control module for controlling an autonomous driving function, and the autonomous driving control module may mean a software module or a chip in which the software module is implemented as hardware. The autonomous driving control module may be included in the autonomous vehicle 12 as a component of the autonomous vehicle 12, but may be configured as separate hardware outside the autonomous vehicle 12 and connected to the autonomous vehicle 12.

The autonomous vehicle 12 may obtain state information of the autonomous vehicle 12, may detect (recognize) a surrounding environment and an object, may generate map data, may determine a moving path and a driving plan, or may determine an operation using sensor information obtained from various types of sensors.

Here, in order to determine the moving path and the driving plan, the autonomous vehicle 12, like the robot 11, may use sensor information obtained from at least one sensor among a LiDAR, a radar, and a camera.

In particular, the autonomous vehicle 12 may recognize an environment or object in a region whose view is blocked or a region of a given distance or more by receiving sensor information for the environment or object from external devices, or may directly receive recognized information for the environment or object from external devices.

The autonomous vehicle 12 may perform the above-described operations using a learning model configured with at least one artificial neural network. For example, the autonomous vehicle 12 may recognize a surrounding environment and an object using a learning model, and may determine a driving route using recognized surrounding environment information or object information. Here, the learning model may have been directly trained in the autonomous vehicle 12 or may have been trained in an external device, such as the AI server 16.

In this case, the autonomous vehicle 12 may directly generate results using the learning model and perform an operation, but may perform an operation by transmitting sensor information to an external device, such as the AI server 16, and receiving results generated in response thereto.

The autonomous vehicle 12 may determine a moving path and a driving plan using at least one of map data, object information detected from sensor information, and object information obtained from an external device, and may drive based on the determined moving path and driving plan by controlling the driving unit.

The map data may include object identification information for various objects disposed in a space (e.g., road) in which the autonomous vehicle 12 drives. For example, the map data may include object identification information for fixed objects, such as a street light, a rock, and a building, or the like, and movable objects, such as a vehicle and a pedestrian. In addition, the object identification information may include a name, a type, a distance, a position, or the like.

Further, the autonomous vehicle 12 may perform an operation or may drive by controlling the driving unit based on a user's control/interaction. In this case, the autonomous vehicle 12 may obtain intention information of an interaction according to a user' behavior or voice utterance, may determine a response based on the obtained intention information, and may perform an operation.

### <AI+XR>

An AI technology is applied to the XR device 13, and the XR device 13 may be implemented as a head-mount display (HMD), a head-up display (HUD) provided in a vehicle, television, a mobile phone, a smartphone, a computer, a wearable device, home appliances, a digital signage, a vehicle, a fixed type robot, or a movable type robot.

The XR device 13 may generate position data and attributes data for three-dimensional points by analyzing three-dimensional point cloud data or image data obtained through various sensors or from an external device, may obtain information on a surrounding space or real object based on the generated position data and attributes data, and may output an XR object by rendering the XR object. For example, the XR device 13 may output an XR object, including additional information for a recognized object, by corresponding the XR object to the recognized object.

The XR device 13 may perform the above operations using a learning model configured with at least one artificial neural network. For example, the XR device 13 may recognize a real object in three-dimensional point cloud data or image data using a learning model, and may provide information corresponding to the recognized real object. Here, the learning model may have been directly trained in the XR device 13 or may have been trained in an external device, such as the AI server 16.

In this case, the XR device 13 may directly generate results using a learning model and perform an operation, but may perform an operation by transmitting sensor information to an external device, such as the AI server 16, and receiving results generated in response thereto.

### <AI+Robot+Autonomous Driving>

An AI technology and an autonomous driving technology are applied to the robot 11, and the robot 11 may be implemented as a guide robot, a transport robot, a cleaning robot, a wearable robot, an entertainment robot, a pet robot, an unmanned flight robot, or the like.

The robot 11 to which the AI technology and the autonomous driving technology have been applied may mean a robot itself having an autonomous driving function or may mean the robot 11 interacting with the autonomous vehicle 12.

The robot 11 having the autonomous driving function may collectively refer to devices that autonomously move along a given route without control of a user or autonomously determine a route and move.

The robot 11 and the autonomous vehicle 12 having the autonomous driving function may use a common sensing method in order to determine one or more of a moving path or a driving plan. For example, the robot 11 and the autonomous vehicle 12 having the autonomous driving function may determine one or more of a moving path or a driving plan using information sensed through a LiDAR, a radar, a camera, or the like.

The robot 11 interacting with the autonomous vehicle 12 is present separately from the autonomous vehicle 12, and may perform an operation associated with an autonomous driving function inside or outside the autonomous vehicle 12 or associated with a user got in the autonomous vehicle 12.

In this case, the robot 11 interacting with the autonomous vehicle 12 may control or assist the autonomous driving function of the autonomous vehicle 12 by obtaining sensor information in place of the autonomous vehicle 12 and providing the sensor information to the autonomous vehicle 12, or by obtaining sensor information, generating surrounding environment information or object information, and providing the surrounding environment information or object information to the autonomous vehicle 12.

Alternatively, the robot 11 interacting with the autonomous vehicle 12 may control the function of the autonomous vehicle 12 by monitoring a user got in the autonomous vehicle 12 or through an interaction with a user. For example, when a driver is determined to be a drowsiness state, the robot 11 may activate the autonomous driving function of the autonomous vehicle 12 or assist control of the driving unit of the autonomous vehicle 12. In this case, the function of the autonomous vehicle 12 controlled by the robot 11 may include a function provided by a navigation system or audio system provided within the autonomous vehicle 12, in addition to an autonomous driving function simply.

Alternatively, the robot 11 interacting with the autonomous vehicle 12 may provide information to the autonomous vehicle 12 or may assist a function outside the autonomous vehicle 12. For example, the robot 11 may provide traffic information, including signal information, to the autonomous vehicle 12, as in a smart traffic light, and may also interact with the autonomous vehicle 12, as in an automatic electric charger for electric vehicles, to automatically connect an electric charger to the charging port.

### <AI+Robot+XR>

An AI technology and an XR technology are applied to the robot 11, and the robot 11 may be implemented as a guide robot, a transport robot, a cleaning robot, a wearable robot, an entertainment robot, a pet robot, an unmanned flight robot, a drone, or the like.

The robot 11 to which the XR technology has been applied may mean a robot, that is, a target of control/interaction within an XR image. In this case, the robot 11 is different from the XR device 13, and they may operate in conjunction with each other.

When the robot 11, that is, a target of control/interaction within an XR image, obtains sensor information from sensors including a camera, the robot 11 or the XR device 13 may generate an XR image based on the sensor information, and the XR device 13 may output the generated XR image. In addition, the robot 11 may operate based on a control signal received through the XR device 13 or a user's interaction.

For example, a user may identify XR images corresponding to the perspective of robot 11, which is remotely connected through an external device such as the XR device 13, and may adjust the autonomous driving path of the robot 11 through an interaction, may control an operation or driving, or may identify information of a surrounding object.

### <AI+Autonomous Driving+XR>

An AI technology and an XR technology are applied to the autonomous vehicle 12, and the autonomous vehicle 12 may be implemented as a movable type robot, a vehicle, an unmanned aerial vehicle, or the like.

The autonomous vehicle 12 to which the XR technology has been applied may mean an autonomous vehicle equipped with means for providing an XR image or an autonomous vehicle, that is, a target of control/interaction within an XR image. In particular, the autonomous vehicle 12, that is, a target of control/interaction within an XR image, is different from the XR device 13, and they may operate in conjunction with each other.

The autonomous vehicle 12 equipped with the means for providing an XR image may obtain sensor information from sensors including a camera, and may output an XR image generated based on the obtained sensor information. For example, the autonomous vehicle 12 includes an HUD, and may provide a passenger with an XR object corresponding to a real object or an object within a screen by outputting an XR image.

In this case, when the XR object is output to the HUD, at least a portion of the XR object may be output so as to overlap with a real object toward which a passenger's gaze is directed. On the other hand, when the XR object is output on a display included in the autonomous vehicle 12, at least a portion of the XR object may be output to overlap with an object within the screen. For example, the autonomous vehicle 12 may output XR objects corresponding to objects, such as a carriageway, another vehicle, a traffic light, a traffic sign, a two-wheeled vehicle, a pedestrian, and a building.

When the autonomous vehicle 12, that is, a target of control/interaction within an XR image, obtains sensor information from sensors including a camera, the autonomous vehicle 12 or the XR device 13 may generate an XR image based on the sensor information, and the XR device 13 may output the generated XR image. In addition, the autonomous vehicle 12 may operate based on a control signal received through an external device, such as the XR device 13, or a user's interaction.

### [Extended Reality Technology]

Extended reality (XR) collectively refers to virtual reality (VR), augmented reality (AR), and mixed reality (MR). A VR technology provides an object or background of the real world as a computer graphic (CG) image only. An AR technology provides a virtually produced CG image on an actual thing image. An MR technology is a computer graphics technology for mixing and combining virtual objects with the real world and providing them.

The MR technology is similar to the AR technology in that both display real and virtual objects. However, while in the AR technology, a virtual object is used in a form to supplement a real object, in the MR technology, unlike in the AR technology, a virtual object and a real object are used as the same character.

The XR technology may be applied to an HMD, an HUD, a mobile phone, a tablet PC, a laptop, a desktop, TV, a digital signage, or the like, and a device to which the XR technology has been applied may be referred to as an XR device.

Hereinafter, an electronic device that provides extended reality according to an embodiment of the present invention will be described. In particular, an optical device applied to augmented reality and an electronic device including the same will be described in detail.

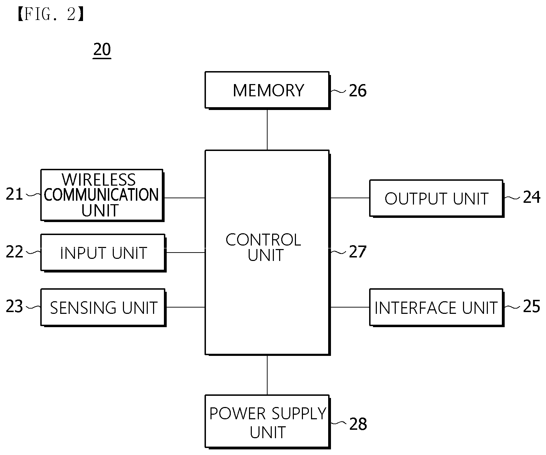

FIG. 2 is a block diagram illustrating a configuration of an extended reality electronic device 20 according to an embodiment of the present invention.

Referring to FIG. 2, the extended reality electronic device 20 may include a wireless communication unit 21, an input unit 22, a sensing unit 23, an output unit 24, an interface unit 25, a memory 26, a control unit 27, a power supply unit 28, and the like. It is understood that implementing all the components illustrated in FIG. 2 is not a requirement for the electronic device 20, and that the electronic device 20 described in the present specification may alternatively be implemented by more or fewer components.

More specifically, among the above components, the wireless communication unit 21 may include one or more modules that allow wireless communications between the electronic device 20 and a wireless communication system, between the electronic device 20 and another electronic device, or between the electronic device 20 and an external server. Further, the wireless communication unit 21 may include one or more modules that connect the electronic device 20 to one or more networks.

The wireless communication unit 21 may include at least one of a broadcast receiving module, a mobile communication module, a wireless Internet module, a short-range communication module, and a position information module.

The input unit 22 may include a camera or an image input unit for receiving image signals, a microphone or an audio input unit for receiving audio signals, or a user input unit, for example, touch keys, push keys (mechanical keys), or the like for receiving information from the user. Audio data or image data obtained by the input unit 22 may be analyzed and processed by user control commands.

The sensing unit 23 may include one or more sensors for sensing at least one of internal information of the electronic device 20, information about a surrounding environment of the electronic device 20, and user information.

For example, the sensing unit 23 may include at least one of a proximity sensor, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (e.g., a capturing device), a microphone, a battery gauge, an environment sensor (e.g., a barometer, a hygrometer, a thermometer, a radiation detection sensor, a thermal sensor, a gas sensor, or the like), and a chemical sensor (e.g., an electronic nose, a health care sensor, a biometric sensor, or the like). Meanwhile, the electronic device 20 described in the present specification may combine and utilize information obtained from at least two or more of these sensors.

The output unit 24 may be configured to output various types of information related to audio, video, tactile output, or the like, and may include at least one of a display unit, an audio output unit, a haptic module, or an optical output unit. The display unit may have an inter-layered structure or an integrated structure with a touch sensor to implement a touch screen. The touch screen may provide an output interface between the electronic device 20 and the user, as well as function as a user input unit that provides an input interface between the augmented reality electronic device 20 and the user.

The interface unit 25 serves as an interface with various types of external devices that are connected to the electronic device 20. Through the interface unit 25, the electronic device 20 may receive virtual reality or augmented reality content from an external device, and perform mutual interaction by exchanging various input signals, sensing signals, and data.

For example, the interface unit 25 may include at least one of wired/wireless headset ports, external charger ports, wired/wireless data ports, memory card ports, ports for connecting a device having an identification module, audio input/output (I/O) ports, video input/output (I/O) ports, and earphone ports.

Further, the memory 26 stores data supporting various functions of the electronic device 20. The memory 26 may store a plurality of application programs or applications executed in the electronic device 20, and pieces of data or instructions for operations of the electronic device 20. At least some of these application programs may be downloaded from an external server via wireless communication. Further, at least some of these application programs may be present on the electronic device 20 at time of shipping, which is typically the case for basic functions (e.g., receiving a call, placing a call, receiving a message, sending a message, and the like) of the electronic device 20.

The control unit 27 controls overall operations of the electronic device 20, in addition to the operations related to the application programs. The control unit 27 may process signals, data, information, and the like, which are input or output by the components described above.

In addition, the control unit 27 may execute an application stored in the memory 26 to control at least some of the components and provide appropriate information to the user or process functions. Furthermore, the control unit 27 may operate by combining at least two or more components included in the electronic device 20 to execute the application.

In addition, the control unit 27 may detect the movement of the electronic device 20 or the user by using a gyroscope sensor, a gravity sensor, a motion sensor, and the like included in the sensing unit 23. Alternatively, the control unit 27 may detect objects approaching the electronic device 20 or the user by using sensors such as a proximity sensor, a light sensor, a magnetic sensor, an infrared sensor, an ultrasonic sensor, or an optical sensor included in the sensing unit 23. In addition, the control unit 27 may also detect the movement of the user through sensors provided in a controller that operates in conjunction with the electronic device 20.

Further, the control unit 27 may perform operations or functions of the electronic device 20 using the application programs stored in the memory 26.

The power supply unit 28 receives external power and internal power and supplies power to the respective components included in the electronic device 20 under the control of the control unit 27. The power supply unit 28 includes a battery, which may be provided in \a built-in or replaceable form.

At least some of the respective components may operate in cooperation with one another to implement the operation, control, or control method of the electronic device according to various embodiments described below. Further, the operation, control, or control method of the electronic device according to various embodiments may be implemented on the electronic device by an execution of at least one application program stored in the memory 26.

Hereinafter, the electronic device described as an example of the present invention will be described based on an embodiment applied to HMDs. However, the embodiments of the electronic device according to the present invention may also include devices such as mobile phones, smart phones, laptop computers, terminals for digital broadcasting, personal digital assistants (PDAs), portable multimedia players (PMPs), navigation systems, slate personal computers (PCs), tablet PCs, ultra books, and wearable devices. The wearable devices may include, in addition to the HMDs, watch-type terminals (smartwatches), contact lenses, VR/AR/MR glasses, and the like.

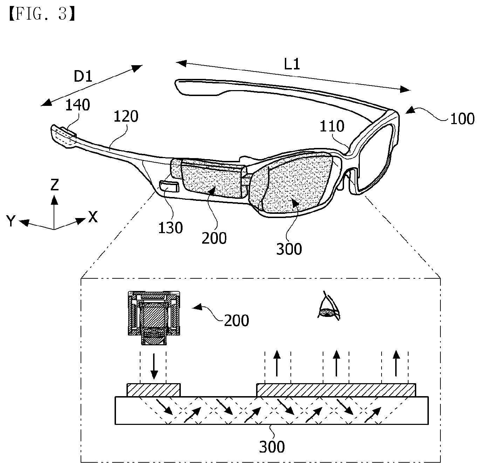

FIG. 3 is a perspective view of an augmented reality electronic device according to an embodiment of the present invention.

As shown in FIG. 3, the electronic device according to the embodiment of the present invention may include a frame 100, an optical device 200, and a display unit 300.

The electronic device may be provided as a glass type (smart glass). The glass-type electronic device may be configured to be worn on the head of the human body and may include the frame (a case, a housing, or the like) 100 therefor. The frame 100 may be formed of a flexible material to facilitate wearing.

The frame 100 is supported on the head and has a space on which various components are mounted. As illustrated in the drawing, electronic components such as the optical device 200, a user input unit 130, or an audio output unit 140 may be mounted on the frame 100. In addition, a lens covering at least one of a left eye and a right eye may be detachably mounted on the frame 100.

As illustrated in the drawing, the frame 100 may have a form of glasses worn on a face in the human body of a user, but the present invention is not necessarily limited thereto, and the frame 100 may have a form such as goggles or the like, which are worn in close contact with the face of the user.

The frame 100 may include a front frame 110 having at least one opening and a pair of side frames 120 that extend in a y-direction (based on FIG. 3) intersecting the front frame 110 and are parallel to each other.

The frame 100 may have a length DI in the x-direction and a length LI in the y-direction, which may be the same or different from each other.

The optical device 200 is provided to control various electronic components provided in the electronic device.

The optical device 200 may generate an image to be shown to the user or a video in which images are continued. The optical device 200 may include an image source panel that generates an image and a plurality of lenses that diffuses and converges light generated from the image source panel.

The optical device 200 may be fixed to any one side frame 120 of two side frames 120. For example, the optical device 200 may be fixed to an inside or an outside of any one side frame 120 or embedded and integrally formed in any one side frame 120. Alternatively, the optical device 200 may be fixed to the front frame 110 or provided separately from the electronic device.

The display unit 300 may be implemented in the form of an HMD. The HMD form refers to a display scheme that is mounted on the head and displays a video directly in front of the user's eye. When the user wears the electronic device, the display unit 300 may be disposed to correspond to at least one of the left eye and the right eye so as to provide the video directly in front of the user's eye. In this drawing, it is illustrated that the display unit 300 is located at a part corresponding to the right eye so as to output the video toward the right eye of the user. However, as described above, the display unit 300 is not thereto and may be deposed on both the left and right eyes.

The display unit 300 may allow the image generated by the optical device 200 to be displayed to the user while the user visually recognizes an external environment. For example, the display unit 300 may project the image to a display area using a prism.

In addition, the display unit 300 may be formed to be light-transmitting so that the projected image and a general field of view (a range visible to the user through their eyes) may be seen at the same time. For example, the display unit 300 may be semi-transparent and may be formed by an optical element including glass.

In addition, the display unit 300 may be inserted into and fixed to the opening included in the front frame 110 or located on a rear surface (i.e., between the opening and the user) of the opening to be fixed to the front frame 110. In the drawing, a case in which the display unit 300 is located on the rear surface of the opening and fixed to the front frame 110 is illustrated as an example, but unlike this, the display unit 300 may be disposed and fixed at various positions of the frame 100.

As shown in FIG. 3, in the electronic device, when image light for the image is incident on one side of the display unit 300 by the optical device 200, the image light is emitted to the other side through the display unit 300 to show the image generated by the optical device 200 to the user.

As a result, the user may view the image generated by the optical device 200 simultaneously while viewing the external environment through the opening of the frame 100. That is, the video output through the display unit 300 may appear to overlap with the general field of view. The electronic device may provide augmented reality (AR) in which a virtual image overlaps with an image or background of reality using the characteristics of the display to show one image.

Furthermore, in addition to the above operation, the external environment and the image generated by the optical device 200 may be provided to the user with a time difference within a short period of time that is not perceivable by the human. For example, within a single frame, the external environment may be provided to the user during one section, while the video from the optical device 200 may be provided during another section.

Alternatively, both overlap and time difference may be provided.

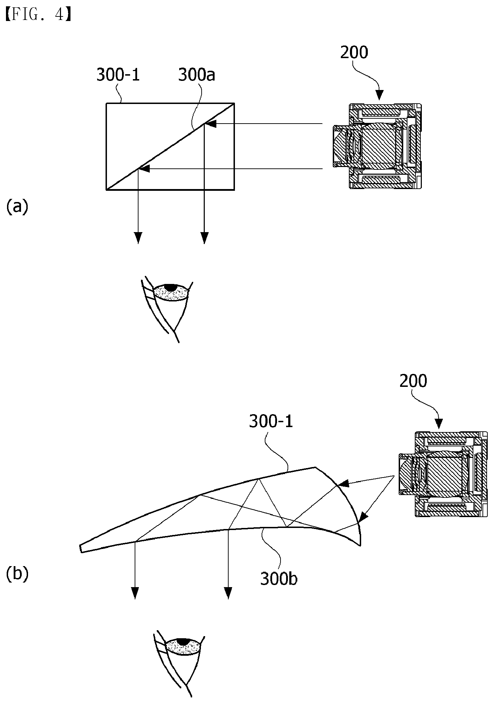

FIGS. 4 to 6 are conceptual diagrams for describing various display methods applicable to the display unit according to the embodiment of the present invention.

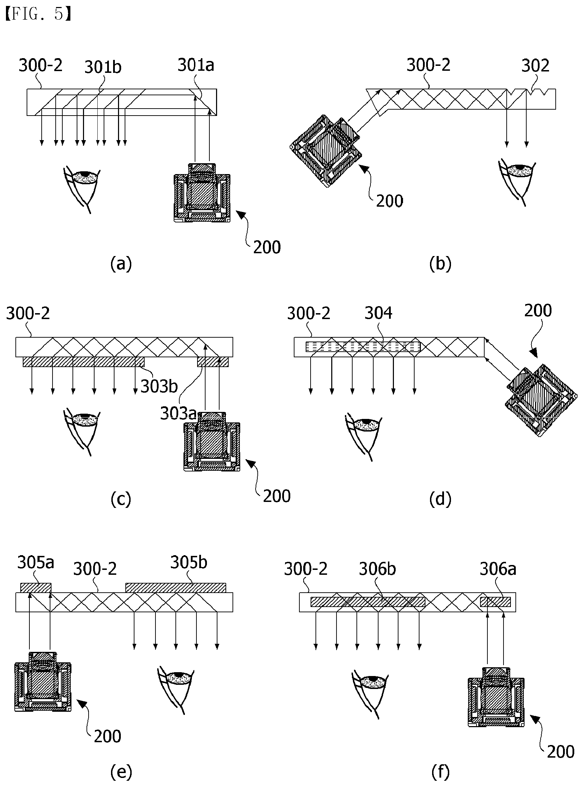

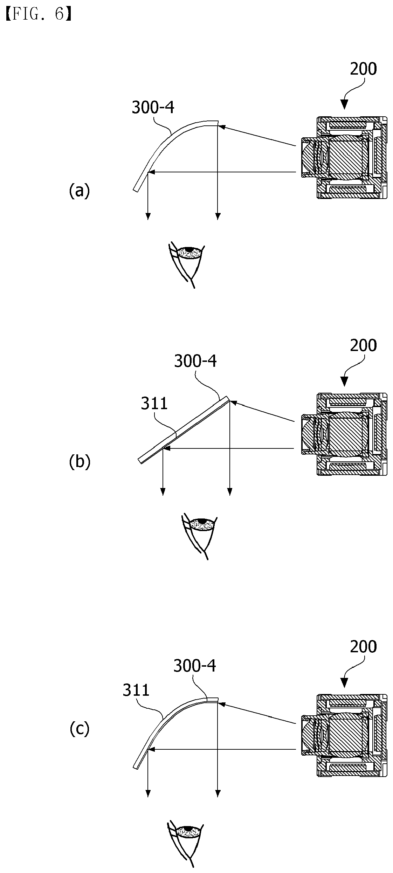

Specifically, FIG. 4 is a diagram for describing an embodiment of a prism-type optical element, FIG. 5 is a diagram for describing an embodiment of a waveguide-type optical element, and FIG. 6 is a drawing for describing an embodiment of a surface reflection-type optical element.

As shown in FIG. 4, a prism-type optical element may be used in a display unit 300-1 according to the embodiment of the present invention.

In an embodiment, as shown in FIG. 4A, the prism-type optical element may use a flat-type glass optical element in which a surface 300a on which image light is incident and from which the image light is emitted is planar, or as shown in FIG. 4B, the prism-type optical element may use a freeform glass optical element in which a surface 300b from which the image light is emitted is formed as a curved surface without a constant radius of curvature.

The flat-type glass optical element may receive image light generated by the optical device 200 through a flat side surface, reflect the received image light by using a total reflection mirror 300a installed therein, and emit the reflected image light toward a user. Here, the total reflection mirror 300a provided inside the flat-type glass optical element may be formed inside the flat-type glass optical element by laser light.

The freeform glass optical element is formed so that a thickness thereof decreases as a distance from the surface on which light is incident increases, receives image light generated by the optical device 200 through a side surface, totally reflects the received image light internally, and emits the reflected light toward a user.

As shown in FIG. 5, a waveguide-type optical element or light guide optical element (LOE) may be used in a display unit 300-2 according to another embodiment of the present invention.

In an embodiment, the waveguide or light guide-type optical element may be implemented by using a segmented beam splitter-type glass optical element as shown in FIG. 5A, saw tooth prism-type glass optical element as shown in FIG. 5B, glass optical element having a diffractive optical element (DOE) as shown in FIG. 5C, glass optical element having a hologram optical element (HOE) as shown in FIG. 5D, a glass optical element having a passive grating as shown in FIG. 5E, and a glass optical element having an active grating as shown in FIG. 5F.

As shown in FIG. 5A, the segmented beam splitter-type glass optical element may include a total reflection mirror 301a on a part, on which an optical image is incident, and a segmented beam splitter 301b on a part, from which the optical image is emitted, inside the glass optical element.

Accordingly, the optical image generated by the optical device 200 is totally reflected by the total reflection mirror 301a inside the glass optical element, and the totally reflected optical image is partially separated and emitted by the segmented beam splitter 301b and eventually perceived by the user's vision while being guided in a longitudinal direction of the glass.

In the saw tooth prism-type glass optical element as shown in FIG. 5B, the optical image generated by the optical device 200 is incident on a side surface of the glass in an oblique direction and totally reflected into the inside of the glass, emitted to the outside of the glass by a saw tooth-shaped uneven structure 302 formed in a part from which the optical image is emitted, and eventually perceived by the user's vision.

The glass optical element having a diffractive optical element (DOE) as shown in FIG. 5C may have a first diffraction unit 303a on a surface of a part on which the optical image is incident and a second diffraction unit 303b on a surface of a part from which the optical image is emitted. The first and second diffraction units 303a and 303b may be provided in a manner that a specific pattern is patterned on the surface of the glass or a separate diffraction film is attached thereon.

Accordingly, the optical image generated by the optical device 200 is diffracted as it is incident through the first diffraction unit 303a, guided along the longitudinal direction of the glass while being totally reflected, emitted through the second diffraction unit 303b, and eventually perceived by the user's vision.

The glass optical element having a hologram optical element (HOE) as shown in FIG. 5D may have an out-coupler 304 inside the glass from which the optical image is emitted. Accordingly, the optical image is incident from the optical device 200 in the oblique direction through a side surface of the glass, guided in the longitudinal direction of the glass by being totally reflected, emitted by the out-coupler 304, and eventually perceived by the user's vision. The structure of the HOE may be modified gradually to be further divided into a structure having a passive grating and a structure having an active grating.

The glass optical element having a passive grating as shown in FIG. 5E may have an in-coupler 305a on the opposite surface of a glass surface on which the optical image is incident and an out-coupler 305b on the opposite surface of the glass surface from which the optical image is emitted. Here, the in-coupler 305a and the out-coupler 305b may be provided in the form of a film having a passive grating.

Accordingly, the optical image incident on the glass surface at the light-incident side of the glass is totally reflected by the in-coupler 305a provided on the opposite surface, guided in the longitudinal direction of the glass, emitted through the opposite surface of the glass by the out-coupler 305b, and eventually perceived by the user's vision.

The glass optical element having an active grating as shown in FIG. 5F may have an in-coupler 306a formed as an active grating inside the glass through which an optical image is incident and an out-coupler 306b formed as an active grating inside the glass from which the optical image is emitted.

Accordingly, the optical image incident on the glass is totally reflected by the in-coupler 306a, guided in the longitudinal direction of the glass, emitted to the outside of the glass by the out-coupler 306b, and eventually perceived by the user's vision.

A pin mirror-type optical element may be used in a display unit according to a modified example.

Further, the surface reflection-type optical element based on a freeform combiner method as shown in FIG. 6A may use freeform combiner glass, for which a plurality of flat surfaces having different incidence angles for an optical image are combined to form one glass with a curved surface as a whole to perform the role of a combiner. Such a freeform combiner glass 300 allows an optical image to be incident at different angles depending on the region and to be emitted toward the user.

The surface reflection-type optical element based on a Flat hologram optical element (HOE) method as shown in FIG. 6B may have a hologram optical element (HOE) 311 coated or patterned on the surface of flat glass, in which an optical image emitted by the optical device 200 passes through the HOE 311, reflects from the surface of the glass, again passes through the HOE 311, and is eventually emitted toward the user.

The surface reflection-type optical element based on the freeform HOE method as shown in FIG. 6C may have a HOE 313 coated or patterned on the surface of freeform glass, and operating principles may be the same as described with reference to FIG. 6B.

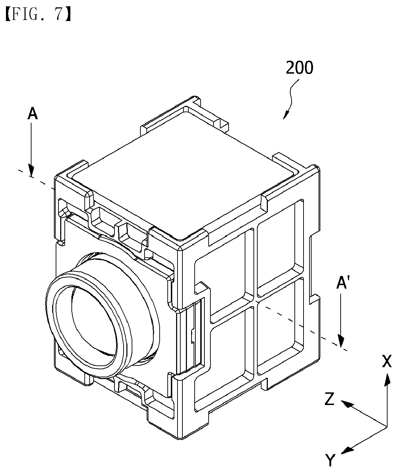

FIG. 7 is a perspective view of the optical device according to one embodiment, and

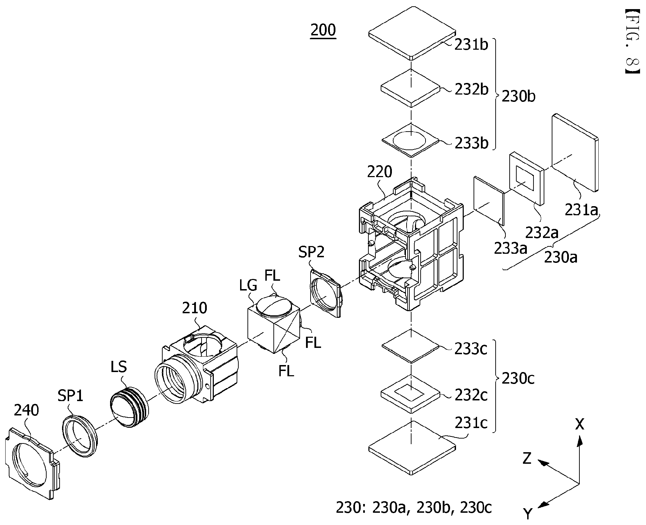

FIG. 8 is an exploded perspective view of the optical device according to one embodiment.

Referring to FIGS. 7 and 8, the optical device 200 according to one embodiment may include an outer lens LS, a barrel 210, a housing 220, a light source unit 230, a light guide LG, lenses FL, and an additional housing 240. In addition, the optical device 200 may include a first spacer SP1 and a second spacer SP2.

First, the outer lens LS may be inserted into the barrel 210. That is, the barrel 210 is located on an inner side of the optical device 200 and may accommodate the outer lens LS. In addition, the barrel 210 may accommodate the light guide LG, the lenses LF, the first spacer PS1, and the second spacer SP2.

The barrel 210 may have a space to accommodate the above-described components or additional optical elements. For example, the barrel 210 may include a first groove and a second groove, which will be described below. The outer lens LS may be disposed in the first groove. In addition, the light guide LG may be disposed in the second groove. Further, the first groove and the second groove in the barrel 210 may be disposed to be spaced apart from each other. That is, the barrel 210 has spaces (e.g., grooves) in which the outer lens LS and the light guide LG are disposed, and these spaces may be separated or spaced apart from each other. Accordingly, the insertion or coupling of the light guide with the outer lens may be facilitated.

In contrast, when the spaces are interconnected, miniaturization of the optical device may be achieved.

The outer lens LS may be accommodated in the barrel 210, and the first spacer SP1 may be located on an outer side of the outer lens LS. The first spacer SP1 may be disposed on the outer side of the outer lens LS, which is accommodated in the first groove of the barrel 210, to prevent the outer lens LS from detaching.

The barrel 210 may include a plurality of holes connected to the second groove. The plurality of holes may be located in side surfaces of the barrel 210. Accordingly, light emitted from the light source unit 230 to be described below may be incident on the light guide LG. Furthermore, the light incident on the light guide LG may be reflected and pass through or be transmitted through the outer lens LS to be provided to the above-described waveguide. To this end, the first groove and the second groove may be connected to each other through a through hole. That is, the light reflected by the light guide LG in the second groove may be provided to the outer lens LS of the first groove via the through hole. In addition, as described above, the light from the light source unit 230 may be emitted to the light guide LG inside the barrel 210 through the plurality of holes disposed in the side surfaces of the barrel 210.

The light guide LG may be located in the barrel 210. The light guide LG may be connected to the lenses FL to be described below.

The light guide LG may be provided as at least one prism. For example, the light guide LG may be formed by coupling or joining a plurality of prisms. The light guide LG may include a prism. The prism serves as a reflective member and may, for example, include an X-prism. In an embodiment, the light guide LG may have a structure in which at least two or more prisms are combined. In addition, the light guide LG may be a non-polarizing prism. That is, the light guide LG may not perform polarization on light emitted from light sources 232a, 232b, and 232c.

The light guide LG may include at least two or more coated surfaces (reflective members or reflective sheets). One of the at least two or more coated surfaces may reflect light of a first wavelength and light of a second wavelength, and transmit light of a third wavelength. That is, the coated surface may reflect light of a predetermined wavelength band. Accordingly, for light emitted from each of the plurality of light sources 232a, 232b, and 232c, light within a desired wavelength band may be reflected in the light guide LG. For example, the light after passing through the light guide LG may be provided to the outer lens LS.

The lens FL may be connected to the light guide LG. The lens FL may be disposed adjacent to the light guide LG. For example, the lens FL may be in contact with the light guide. That is, the lens FL may be in contact with the light guide LG. Further, the light guide LG may be in contact with the lens FL.

In addition, the lens FL may be coupled to the light guide LG. In this case, the lens FL may be coupled to the light guide LG through an adhesive member or coupling member. The adhesive member or coupling member may be located between the lens FL and the light guide LG.

The lens FL is located on an outer side surface of the light guide LG, and may be provided as at least one or more lenses. For example, the number of lenses FL may correspond to the number of light sources in the light source unit 230 to be described below. When the number of light sources is three, the number of lenses FL may also be three.

For example, the lenses FL may include a first lens, a second lens, and a third lens corresponding to the light sources. The first lens may correspond to a first light source unit. The second lens may correspond to a second light source unit. The third lens may correspond to a third light source. That is, the first to third lenses may receive light emitted from the first to third light source units, respectively.

The second spacer SP2 may be located in the barrel 210. For example, the second spacer SP2 may be larger in size than the light guide LG or the lens FL. The second spacer SP2 may be disposed on outer sides of the light guide LG and the lens FL. Thus, the light guide LG and the lens FL may not be detached from the barrel 210. In other words, the second spacer SP2 may prevent the light guide LG and the lens FL from being separated from the barrel 210.

The housing 220 may be located on an outer side of the barrel 210. The housing 220 may surround the barrel 210. For example, the housing 220 may be disposed to surround at least one region of the barrel 210. Furthermore, the housing 220 may include a space for accommodating the light source. In addition, the housing 220 may include at least one housing hole. The light source may be disposed in the housing hole. In addition, light emitted from the light source may be provided to the lens FL and the light guide LG through at least one housing hole. The housing 220 may be disposed on the outer side of the barrel 210 and include a space for accommodating the barrel 210 and the light source unit 230.

The light source unit 230 may be provided as at least one or more light source units. As described above, the following description will be provided based on three light source units. The light source units 230 may include a first light source unit 230a, a second light source unit 230b, and a third light source unit 230c.

The first light source unit 230a may overlap the outer lens LS in a second direction (Y-axis direction). The second direction (Y-axis direction) may correspond to a direction of light emitted from the optical device 200. That is, the second direction (Y-axis direction) may correspond to a direction in which the light emitted from the light source device 220 is reflected by the light guide LG and emitted to the above-described display unit.

The second light source unit 230b and the third light source unit 230c may be located to face each other. Alternatively, the second light source unit 230b and the third light source unit 230c may be located to face each other.

The second light source unit 230b and the third light source unit 230c may overlap in a first direction (X-axis direction). The first direction (X-axis direction) may be a direction perpendicular to the second direction (Y-axis direction). In addition, a third direction (Z-axis direction) may be a direction perpendicular to the first direction and the second direction.

In addition, the first light source unit 230a may be located in a region between the second light source unit 230b and the third light source unit 230c. In addition, directions of light emitted from the second light source unit 230b and the third light source unit 230c may opposite to each other.

The light source units may include substrates 231a, 231b, and 231c, the light sources 232a, 232b, and 232c, and optical elements 233a, 233b, and 233c, respectively.

Furthermore, the substrates 231a, 231b, and 231c, the light sources 232a, 232b, and 232c, and the optical elements 233a, 233b, and 233c may be sequentially located toward the interior. That is, the optical element may be located adjacent to the light guide LG relative to the substrate and the light source.

The substrates 231a, 231b, and 231c may be connected to the light sources 232a, 232b, and 232c, respectively, and may transmit electrical energy to enable the light sources 232a, 232b, and 232c to emit light.

The substrates 231a, 231b, and 231c may each be located on the outermost side of the housing 220.

In addition, the substrates 231a, 231b, and 231c may include a first substrate 231a, a second substrate 231b, and a third substrate 231c. The first substrate 231a may overlap the light guide LG in the second direction (Y-axis direction). The second substrate 231b and the third substrate 231c may overlap each other in the first direction (X-axis direction). In addition, the second substrate 231b and the third substrate 231c may be located to face each other in the housing 220. In addition, the first substrate 231a may be located in a region between the second substrate 231b and the third substrate 231c.

The light sources 232a, 232b, and 232c may each emit light. For example, light emitted from each of the light sources 232a, 232b, and 232c may be incident on the light guide LG in the housing 222. The light guide LG may be located in the housing 222.

In addition, the light sources 232a, 232b, and 232c may be provided as one or more light sources. The light sources 232a, 232b, and 232c may include a first light source 232a, a second light source 232b, and a third light source 232c. In addition, the light sources 232a, 232b, and 232c may be disposed on the respective substrates.

That is, the light sources 232a, 232b, and 232c in the light source device 220 may be provided as a single light source or a plurality of light sources. For example, the light sources 232a, 232b, and 232c may include a plurality of light sources, including the first light source 232a, the second light source 232b, and the third light source 232c. The first to third light sources 232a to 232c may emit light in the same direction or in different directions. For example, the second light source 232b and the third light source 232c may be located to face each other. The second light source 232b and the third light source 232c may be located to overlap in the first direction (X-axis direction). In addition, the light guide LG may be located between the second light source 232b and the third light source 232c. Accordingly, the light guide LG may overlap the second light source 232b and the third light source 232c.

The first to third light sources 232a to 232c may emit light toward the light guide LG. In addition, the first light source 232a may overlap the light guide LG in the second direction. With this configuration, the optical device 200 may have the light source device 220 in a compact form.

In addition, the first light source 232a, the second light source 232b, and the third light source 232c may each emit light with wavelengths or colors that are partially identical or different from each other. For example, the first light source 232a, the second light source 232b, and the third light source 232c may each emit red, green, or blue light.

The optical elements 233a, 233b, and 233c may be provided as at least one or more optical elements. The optical elements 233a, 233b, and 233c may include a first optical element 233a, a second optical element 233b, and a third optical element 233c respectively corresponding to the first light source 232a, the second light source 232b, and the third light source 232c. The first optical element 233a, the second optical element 233b, and the third optical element 233c may each include a filter. In addition, the first optical element 233a, the second optical element 233b, and the third optical element 233c may each include glass. The first optical element 233a, the second optical element 233b, and the third optical element 233c may each filter light. Alternatively, the first optical element 233a, the second optical element 233b, and the third optical element 233c may each block foreign substances entering the light source at an early stage. That is, the light sources can be protected.

The additional housing 240 may be disposed on the outer side of the barrel 210 and may surround the barrel 210. The barrel 210 is coupled to the housing 220 by various coupling methods, and the additional housing 240 may be coupled to the housing 220. The additional housing 240 may also be coupled to the barrel 210. Accordingly, the optical device 200 according to the embodiment can provide improved reliability.

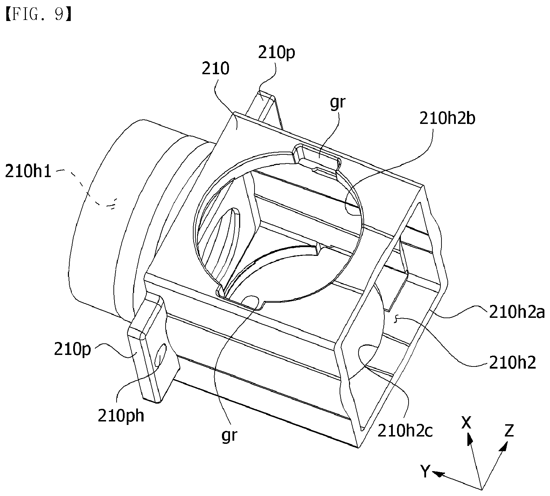

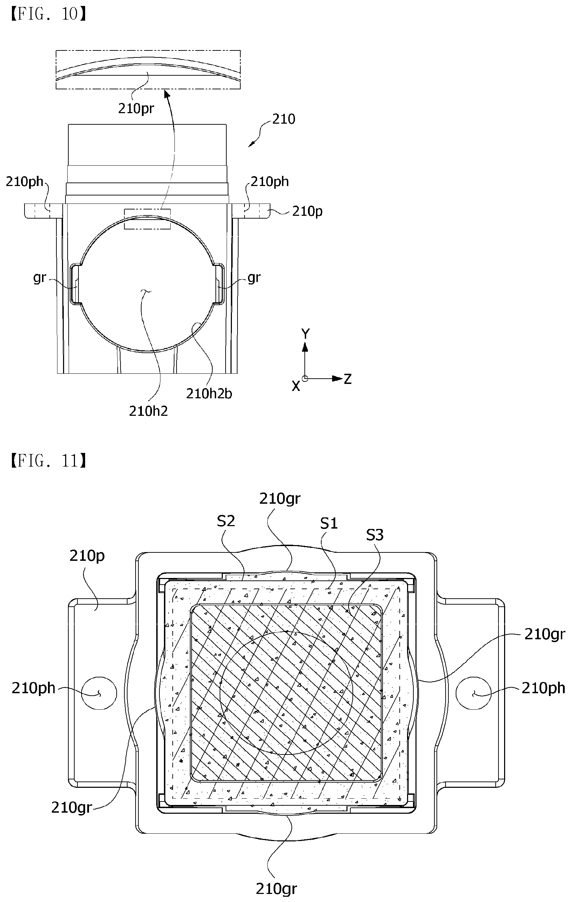

FIG. 9 is a perspective view of the barrel in the optical device according to one embodiment, FIG. 10 is a side view of the barrel in the optical device according to one embodiment, and FIG. 11 is a bottom view of the barrel, into which the light guide is inserted, in the optical device according to one embodiment.

With further reference to FIGS. 9 to 11, in the optical device according to the embodiment, the barrel 210 may include a first groove 210h1 and a second groove 210h2 as described above. The first groove 210h1 and the second groove 210h2 may overlap in the second direction (Y-axis direction). Furthermore, the second groove 210h2 and the first groove 210h1 may be disposed sequentially in the second direction (Y-axis direction).

The outer lens may be disposed in the first groove 210h1. In addition, the light guide may be disposed in the second groove 210h2.

In addition, the first groove 210h1 and the second groove 210h2 may be disposed to be spaced apart from each other in the second direction (Y-axis direction). Further, the first groove 210h1 and the second groove 210h2 may be connected to each other through the through hole as described above. Thus, the light reflected by the light guide in the second groove 210h2 may be provided to the outer lens in the first groove 210h1 and may ultimately be emitted to the display unit.

The barrel 210 may include a protrusion 210p extending outward. The protrusion 210p may include a coupling hole 210ph. The barrel 210 may be coupled to the housing via the coupling hole 210ph.

The barrel 210 may include a plurality of barrel holes to provide light emitted from the plurality of light sources to the light guide. The plurality of barrel holes may correspond to the number of light sources. For example, the barrel holes may include a first barrel hole 210h2a, a second barrel hole 210h2b, and a third barrel hole 210h2c. The first barrel hole 210h2a, the second barrel hole 210h2b, and the third barrel hole 210h2c may be disposed in the side surfaces of the barrel 210.

The first barrel hole 210h2a may overlap the light guide in the second direction. The second barrel hole 210h2b and the third barrel hole 210h2c may be disposed to be spaced apart from each other in the first direction (X-axis direction). In addition, the second barrel hole 210h2b and the third barrel hole 210h2c may overlap each other in the first direction (X-axis direction). The first barrel hole 210h2a may be located between the second barrel hole 210h2b and the third barrel hole 210h2c.

Furthermore, the first barrel hole 210h2a, the second barrel hole 210h2b, and the third barrel hole 210h2c may be connected to the second groove 210h2. That is, the first barrel hole 210h2a, the second barrel hole 210h2b, and the third barrel hole 210h2c may overlap the light guide in the first direction or the second direction.

In addition, each of the second barrel hole 210h2b and the third barrel hole 210h2c may include grip grooves gr formed at edges thereof. Thus, after the light guide is accommodated in the second groove 210h2, lenses (e.g., the second lens and the third lens) adjacent to the second barrel hole 210h2b and the third barrel hole 210h2c may easily come into contact with the light guide. For example, by locating a gripper or the like in the grip grooves gr, the lens may be easily seated on the outer side surface of the light guide.

The protrusion 210p may extend outward from an outer side surface of the barrel 210, which is other than outer side surfaces of the barrel 210 in which the second barrel hole 210h2b and the third barrel hole 210h2c are located. Thus, the reliability of the barrel may be improved. In addition, the barrel may be easily manufactured.

Further, the barrel 210 may include a barrel groove 210gr. In the barrel 210, an inner side surface of the second groove 210h2 may include a barrel groove 210hr that is convex outward. Accordingly, the second spacer may be easily in contact with the inner side surface of the barrel 210.

In addition, in the barrel 210, a size S2 of the second groove 210h2 may be greater than a size S1 of the light guide LG. Thus, optical alignment or the like for the light guide LG may be easily performed. In addition, hereinafter, the size will be described based on an XZ plane.

Further, the barrel 210 may include a barrel protrusion 210pr protruding toward the light guide LG on the inner side surface thereof. The barrel protrusion 210pr may overlap the second barrel hole 210h2b and the third barrel hole 210h2c in the first direction (X-axis direction).

The barrel protrusion 210pr may be in contact with the light guide LG. In this case, the size S1 of the light guide LG may be greater than a size S3 of the barrel protrusion 210pr. Alternatively, the size S3 of the barrel protrusion 210pr may be less than the size S1 of the light guide LG. Accordingly, even when the light guide LG is seated in the barrel 210 and comes into contact with the barrel protrusion 210pr, the light guide LG may not be in contact with the inner side surface of the barrel 210. That is, by reducing the contact between the light guide LG and the inner side surface of the barrel 210, damage to the light guide LG may be suppressed. In other words, the reliability of the barrel 210 and the optical device may be improved.

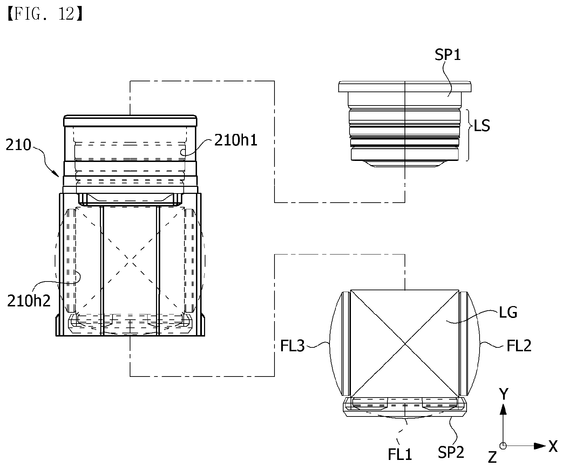

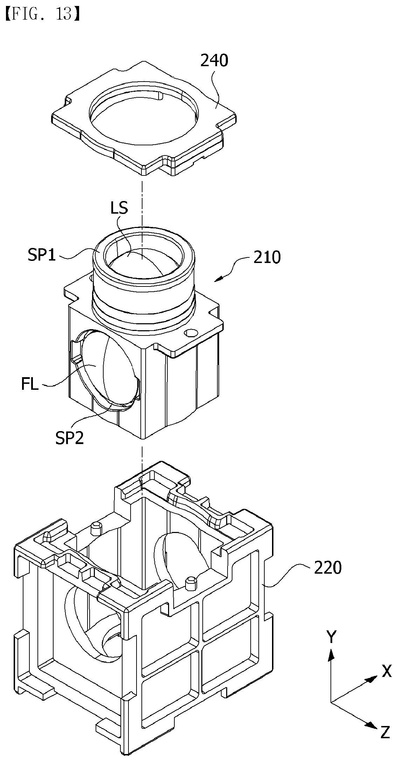

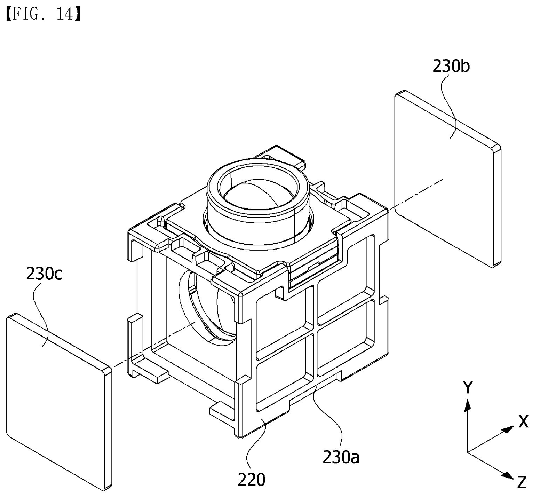

FIG. 12 is a view illustrating a coupling of the outer lens, the first spacer, the light guide, the lens, and the second spacer to the barrel in the optical device according to the embodiment. FIG. 13 is a view illustrating a coupling between the barrel, the housing, and the additional housing in the optical device according to the embodiment. FIG. 14 is a view illustrating a coupling between the housing and the light source unit in the optical device according to the embodiment.

Referring to FIGS. 12 to 14, the outer lens LS may be inserted into the first groove 210h1 of the barrel 210. In addition, in the barrel 210, the first spacer SP1 may be located on the outer side of the outer lens LS in the first groove 210h1. The first spacer SP1 is in contact with the outer lens LS, and may prevent the outer lens LS from detaching, as described above.

In addition, the light guide LG and lenses FL1, FL2, and FL3 connected to the light guide LG may be inserted into the second groove 210h2. The light guide LG and the lenses FL1, FL2, and FL3 connected to the light guide LG may be located in the second groove 210h2. In addition, the second spacer SP2 may be located on an outer side of the light guide LG and the lenses FL1, FL2, and FL3 connected to the light guide LG. The second spacer SP2 may be in contact with the light guide LS or the lens (especially, a first lens FL1). Thus, the detachment of the light guide LG and the lenses FL1, FL2, and FL3 connected to the light guide LG may be suppressed.

The first spacer SP1 and the second spacer SP2 may be sequentially disposed in the second direction (Y-axis direction). The first spacer SP1 and the second spacer SP2 may overlap in the second direction (Y-axis direction). In addition, between the first spacer SP1 and the second spacer SP2, the outer lens LS, the light guide LG, and the first lens FL1 may be located. Accordingly, the first spacer SP1 and the second spacer SP2 may overlap the outer lens LS, the light guide LG, and the first lens FL1 in the second direction (Y-axis direction).

In addition, the barrel 210 may be inserted into the housing 220. That is, the barrel 210 may be located in an accommodation hole of the housing 220. Furthermore, the housing 220 and the barrel 210 may be coupled to each other using various coupling methods. For example, a protrusion of the housing 220 may be coupled to the coupling hole of the barrel 210. Furthermore, the housing 220 may be located below the barrel 210, and the additional housing 240 may be located above the barrel 210. Through the additional housing 240, the barrel 210 may maintain improved coupling strength with the housing 220.

In addition, after the barrel 210 is accommodated in the housing 220, the plurality of light sources may be inserted into side surfaces of the housing 220. For example, the first light source unit 230a, the second light source unit 230b, and the third light source unit 230c may be located on the side surfaces of the housing 220.

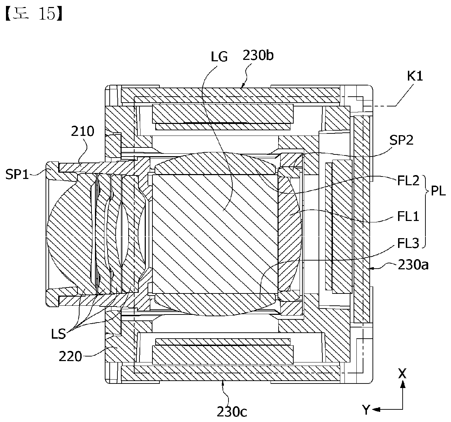

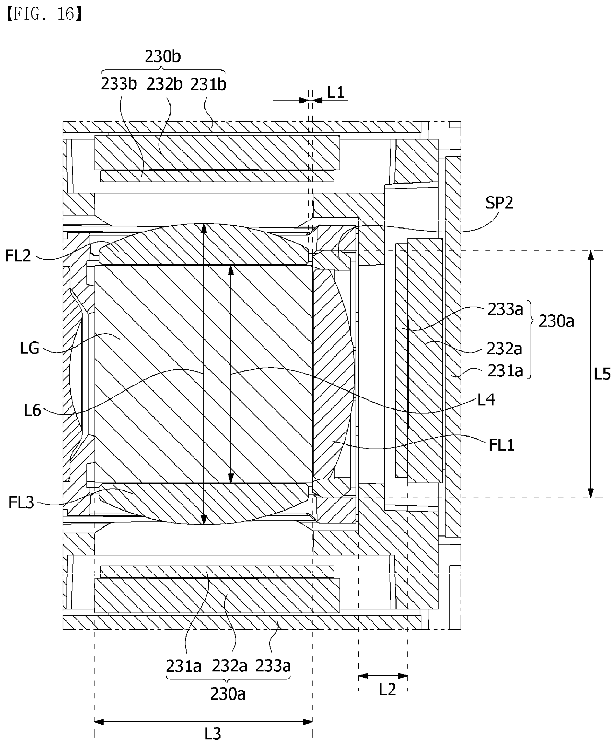

FIG. 15 is a cross-sectional view taken along line AA' in FIG. 7, and FIG. 16 is an enlarged view of portion K1 in FIG. 15.

Referring to FIGS. 15 and 16, in the optical device 200 according to the embodiment, a distance L1 between the light guide LG and the lens FL (e.g., the first lens) may be less than a distance L2 between the light source (e.g., the first light source 232a) and the lens FL (e.g., the first lens). That is, the lens FL may be located closer to the light guide LG than to the light source. With this configuration, the distance L2 between the lens FL and the light source or a back focal length may be reduced. Accordingly, miniaturization of the optical device may be achieved.

Furthermore, the distance L2 between the lens FL and the light source may be less than a length L3 of the light guide LG. Accordingly, the miniaturization of the optical device may be achieved more effectively.

In addition, the second spacer SP2 may be located between the first lens FL1 and the first light source 232a. In addition, a size or length L5 of the second spacer SP2 may be greater than a size or length L4 of the light guide LG. In addition, the size or length L5 of the second spacer SP2 may be less than a sum L6 of the size or length L4 of the light guide LG and sizes or lengths of the lenses FL2 and FL3.

Thus, the light guide and one lens, in a joined state, may be easily inserted into the barrel 210 through the hole in one side surface of the barrel 210. Accordingly, an optical axis alignment in the second direction may be easily performed with the light guide and the first lens in a coupled state.

Furthermore, the plurality of lenses FL1, FL2, and FL3 may be connected to the outer side surfaces of the light guide LG and may be convex toward the light sources 232a, 232b, and 232c, respectively.

For example, the first lens FL1 may be convex toward the first light source 232a. A second lens FL2 may be convex toward the second light source 232b. In addition, a third lens FL3 may be convex toward the third light source 232c. With this configuration, light emitted from the light sources passes through the plurality of lenses FL1, FL2, and FL3 to be focused and provided to the light guide LG. As a result, light efficiency may be improved.

Further, the plurality of lenses FL1, FL2, and FL3 may be coupled to the light guide LG through adhesive members or coupling members. Refractive indices of the plurality of lenses FL1, FL2, and FL3 may each be the same as or different from a refractive index of the light guide LG. For example, the refractive indices of the plurality of lenses FL1, FL2, and FL3 may each be 1.3 or more. In addition, the refractive index of the light guide LG may be 1.5.

Further, light La, Lb, and Lc emitted respectively from the light sources 232a, 232b, and 232c may be incident on the light guide LG. In addition, first light La, second light Lb, and third light Lc emitted respectively from the first to third light sources 232a to 232b may be emitted in the same direction from the light guide LG.

For example, the light guide LG may include at least one coated surface. As described above, one of these plurality of coated surfaces may reflect some of the light of the first wavelength, the light of the second wavelength, and the light of the third wavelength. For example, the first wavelength includes a wavelength band of red light. The second wavelength includes a wavelength band of green light. The third wavelength includes a wavelength band of blue light.

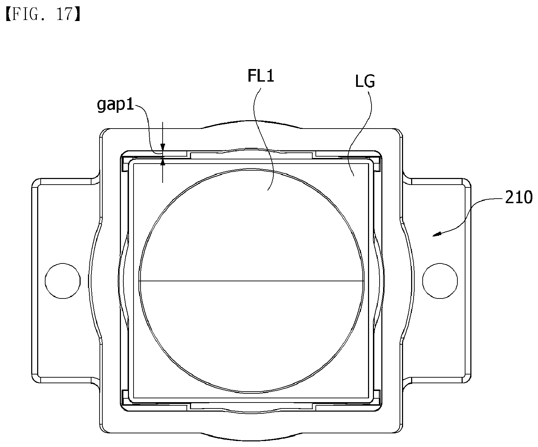

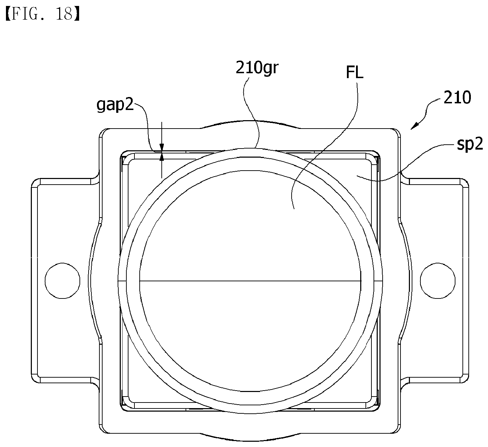

FIG. 17 is a bottom view of the barrel, the light guide, and the lens in the optical device according to one embodiment, and FIG. 18 is a view further including the second spacer based on FIG. 17.

Referring to FIGS. 17 and 18, a separation space may exist between the light guide LG and the inner side surface of the barrel 210. The inner side surface of the barrel 210 may be disposed to be spaced apart from the light guide LG by a first separation distance gap. Accordingly, the light guide LG and the lens FL connected to the light guide LG may be easily tilted. That is, the optical axis alignment or the like may be easily performed. Furthermore, flare phenomena may be suppressed by the lens.

In addition, the second spacer SP2 in the barrel 210 may surround the first lens FL1. The second spacer SP2 may be in contact with the barrel groove 210gr. Thus, the light guide LG and the lens FL surrounded by the spacer SP2 may not detach from the barrel 210.

In addition, the lens FL may be smaller in size than the light guide LG. Thus, the connection between the lens FL and the light guide LG may be easily achieved. Furthermore, the first lens FL1 may not protrude outward from the second spacer SP2. That is, the first lens FL1 may be located inside the second spacer SP.

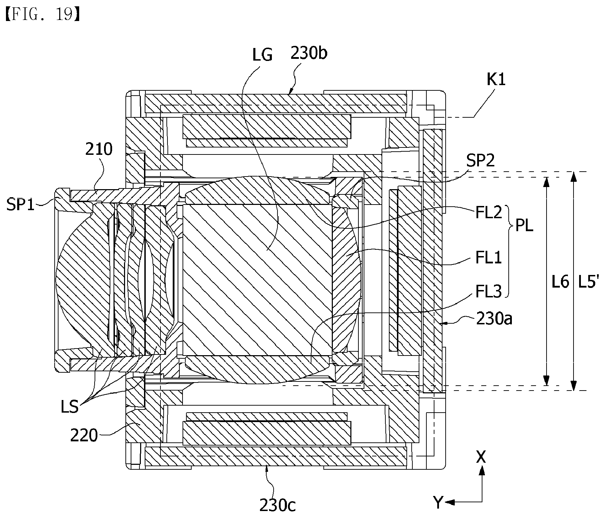

FIG. 19 is a cross-sectional view of an optical device according to another embodiment.

Referring to FIG. 19, except for details to be described below, the details of the outer lens LS, the barrel 210, the housing 220, the light source unit 230, the light guide LG, the lens FL, the additional housing 240, the first spacer SP1, and the second spacer SP2 may be equally applied to the optical device according to another embodiment.

In the optical device according to another embodiment, a size L5' of the second spacer SP2 may be greater than the sum L6 of the size of the lens and the size of the light guide LG. Accordingly, the plurality of lenses may all be connected to the light guide LG and inserted into the barrel 210. That is, the assembly between the light guide LG, the lenses FL, and the barrel 210 may be easily facilitated.

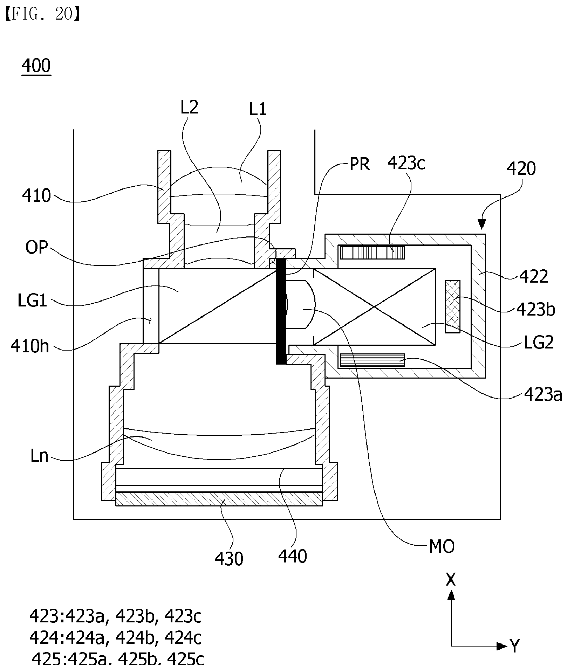

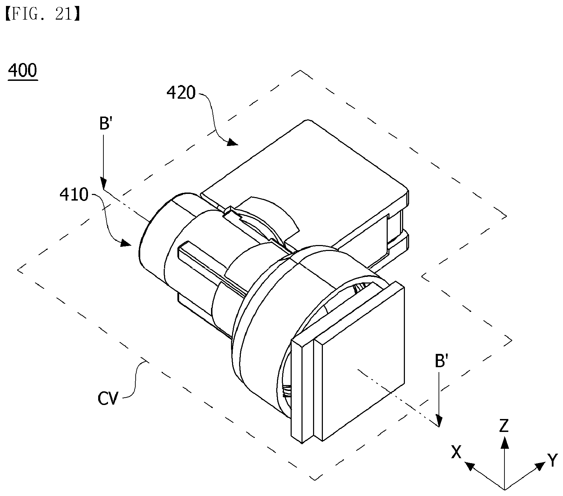

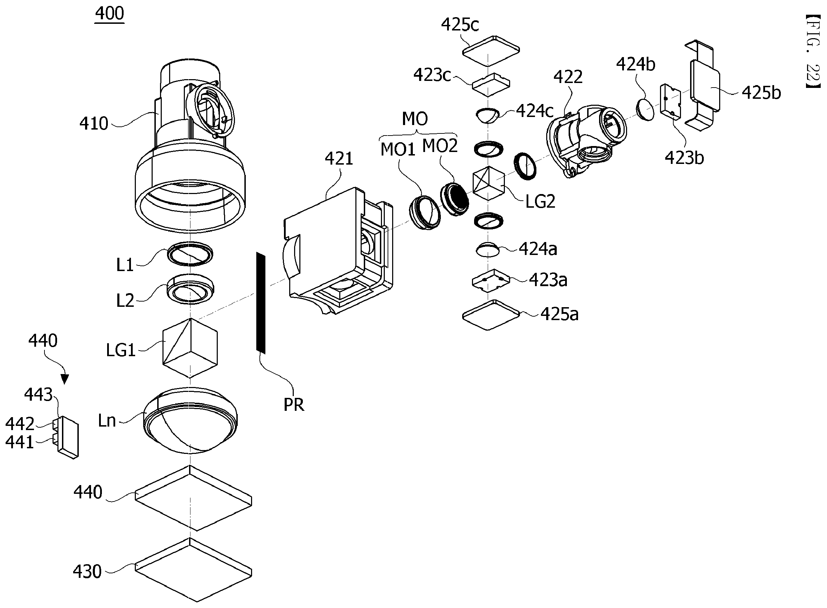

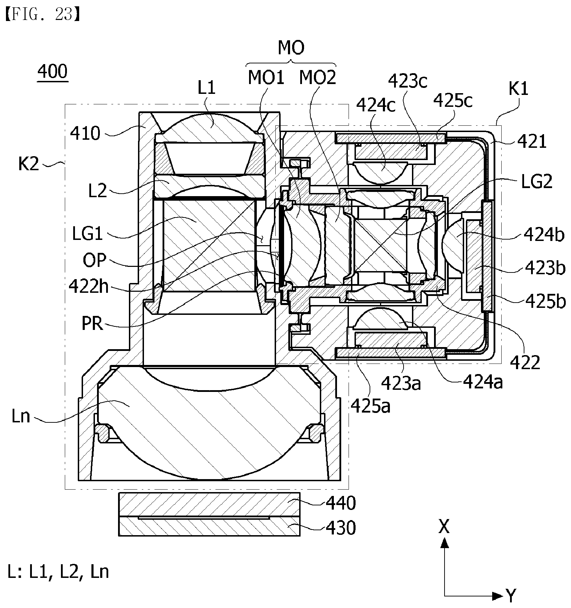

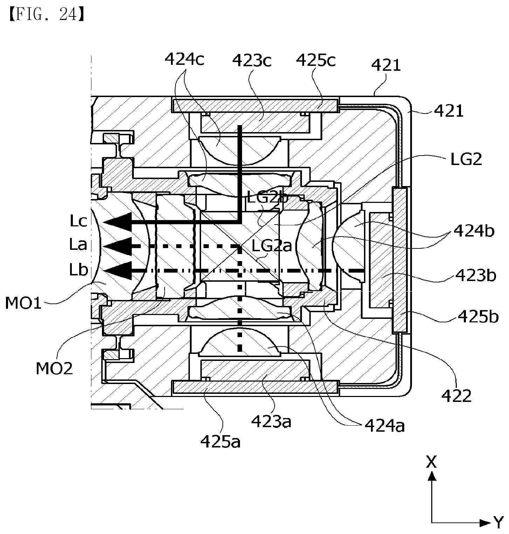

FIG. 20 is a conceptual diagram of an optical device according to still another embodiment, FIG. 21 is a perspective view of the optical device according to still another embodiment, FIG. 22 is an exploded perspective view of the optical device according to still another embodiment, FIG. 23 is a cross-sectional view taken along line BB' in FIG. 21, FIG. 24 is an enlarged view of portion K1 in FIG. 23, and FIGS. 25 and 26 are enlarged views of portion K2 in FIG. 23.

Referring to FIGS. 20 to 23, an optical device 400 according to still another embodiment includes a barrel 410, a lens L, and a first light guide LG1. Furthermore, the optical device 400 may include a light source device 420 located or coupled at an opening OP formed in a side surface of the barrel 410, and a light signal generation unit 430 adjacent to the barrel 410. Further, the optical device 400 may further include a cover CV that covers the barrel 410, the light source device 420, and the light signal generation unit 430, and a substrate (including connectors, not shown).

The lens L may be provided as a plurality of lenses. For example, the lens L may include a plurality of lenses sequentially disposed based on an upper side of the barrel 410. For example, the lens L may include a first lens L1 disposed first on the upper side, a second lens L2 disposed at the rear end of the first lens, and an Nth lens Ln disposed last on the upper side. Here, N may be a natural number of 2 or more. In addition, the Nth lens Ln, among the plurality of lenses L, may be located closest to the light signal generation unit 430, which is located at the rear end of the barrel 410 or the rear end of the plurality of lenses L.

Further, in the embodiment according to the present invention, a first direction (X-axis direction) may correspond to an optical axis. In addition, the first direction (X-axis direction) may correspond to a direction in which light emitted from the light source device 420 is reflected by the light signal generation unit 430 and emitted toward the above-described display unit. In addition, a second direction (Y-axis direction) is a direction perpendicular to the first direction (Y-axis direction). Furthermore, the second direction (Y-axis direction) may correspond to a direction toward the opening OP from the first light guide LG1. In addition, hereinafter, in the specification or the present embodiment, the second direction (Y-axis direction) may correspond to a direction toward a third light guide LG2 from the first light guide LG1. The first light guide LG1 may be referred to as a first light guide unit or a first guide member. In addition, the third light guide LG2 may be referred to as a third light guide unit or a second guide member.

In addition, the barrel 410 may further include a hole corresponding to the opening OP. In an embodiment, the barrel 410 may include a barrel hole or additional hole 410h. The additional hole 410h may be located to face the opening OP. Alternatively, the additional hole 410h may overlap the opening OP in the second direction (Y-axis direction). Alternatively, the additional hole 410h may have a distance in the first direction from the Nth lens Ln equal to a distance between the opening OP and the Nth lens Ln. Alternatively, the additional hole 410h may be located in an inner side surface of the barrel 410, in a region corresponding to a position of the opening OP. With this configuration, through the additional hole 410h, an adhesive member may be easily applied to the light source device 420 that is coupled to, inserted into, fixed to, or connected to the opening OP. Thus, a coupling strength between the barrel 410 and the light source device 420 may be improved. Accordingly, the optical device 400 according to the embodiment may have improved durability, robustness, or reliability. Alternatively, through the additional hole 410h, optical testing of the light source device 420 located in the opening OP may also be easily performed. Alternatively, through the additional hole 410h, the discharge or ejection of a fluid (e.g., air) from the barrel 410 and the light source device 400 may be easily performed. The presence or absence of the additional hole 410h may vary depending on the embodiment. For example, the additional hole 410h may be disposed on in the side surface of the barrel 410 as described above. Alternatively, the additional hole 410h may not be present in the side surface of the barrel 410 in consideration of durability or the like.

In addition, the plurality of lenses L may be located in the barrel 410. In addition, the first light guide LG1 may be located in the barrel 410.

In addition, the barrel 410 according to the embodiment may include the opening OP formed in the side surface thereof. The opening OP may have various shapes such as a circular shape, a polygonal shape, and the like. In addition, the opening OP may correspond to a position of the first light guide LG1.

In an embodiment, the opening OP may overlap the first light guide LG1 in a direction perpendicular to the optical axis. With this configuration, light emitted from the light source device 420 located at a side portion of the barrel 410 may be easily incident on the first light guide LG1.

In addition, the first light guide LG1 may be disposed between two lenses of the plurality of lenses. For example, the first light guide LG1 may be disposed between the first lens L1 and the Nth lens Ln. In addition, the first light guide LG1 may be located between the first lens L1 and the light signal generation unit 430. Further, the first light guide LG1 may be located between the first lens L1 and the second lens L2, or between the second lens L2 and the Nth lens Ln. The various positions of the first light guide LG1 will be described in various embodiments, as will be described below.

In the present embodiment, the first light guide LG1 may be located between the second lens L2 and the Nth lens Ln. Accordingly, the Nth lens Ln may be located between the first light guide LG1 and the light signal generation unit 430. With this configuration, an appropriate optical path may be secured in providing the light reflected from the first light guide LG1 to the light signal generation unit 430. In addition, refraction of the reflected light may occur. Thus, miniaturization of the first light guide LG1 may be achieved.

The first light guide LG1 may include a first prism. The first prism may be a polarizing prism. In addition, the first prism may be a polarized light separation prism. Alternatively, the first prism may be a polarization separation prism.

The first prism may reflect first polarized light and transmit second polarized light. For example, a portion (first polarized light) of light provided from the light source device 420 or incident on the first light guide LG1 may be reflected by the first light guide LG1 and provided to the light signal generation unit 430. In addition, another portion (second polarized light) of the light incident on the first light guide LG1 may pass through the first light guide LG1 and be absorbed in the barrel 410.

In addition, the light emitted from the light source device 420 may be incident on the first light guide LG1 through the opening OP. To this end, as described above, the opening OP may be disposed in a region in which the first light guide LG1 is located. For example, an incident surface of the first light guide LG1 may be located to face the opening OP. Alternatively, the position of the first light guide LG1 in the barrel 410 may be the same as that of the first light guide LG1.

The light source device 420 may include a light source 423 to generate (produce or provide) or emit light. The light source device 420 according to the embodiment may be located in or coupled to the opening OP. That is, the light source device 420 may be connected or coupled to the barrel 410.

The light source device 420 may include a housing 422 that has an opening 422h, the third light guide LG2 disposed in the housing 4220, the light source 423 configured to provide light to the third light guide LG2, and a second light guide PR disposed between the first light guide LG1 and the light source 423.

Furthermore, the light source device 420 may include a light source assembly 421 disposed outside of the light source device 420 and surrounding the housing 422, a light source lens 424 adjacent to the light source 423, and an intermediate lens MO located in the housing 422.

The light source assembly 421 may be disposed on the outermost side of the light source device 420. When it is difficult to mount the light source 423 in the housing 422 or when additional mounting of lenses (light source lenses) is required, the light source assembly 421 may be located outside the housing 422. The light source assembly 421 may be configured as an integrated structure with the housing 422 or as a separate structure.

The housing 422 may include the opening 422h. The housing 422 may be located adjacent to the opening OP of the barrel 410. For example, the opening 422h of the housing 422 may be located to correspond to the opening OP of the barrel 410. Thus, the opening 422h of the housing 422 may overlap the opening OP of the barrel 410 in the second direction (Y-axis direction).

The light source 423 may be located in the housing 422 or the light source assembly 421. The light source 423 may emit light. For example, the light emitted from the light source 423 may be incident on the third light guide LG2 in the housing 422. The third light guide LG2 may be located in the housing 422. The third light guide LG2 may be located between the light source 423 and the first light guide LG1. Accordingly, the third light guide LG2 may transmit the light emitted from the light source 423 to the opening 422h or the first light guide LG1.

In addition, the light source 423 may be provided as one or more light sources. That is, the light source 423 in the light source device 420 may be provided as a single light source or a plurality of light sources. For example, the light source 423 may be provided as a plurality of light sources, including a first light source 423a, a second light source 423b, and a third light source 423c. The first to third light source 423a to 423c may emit light in the same direction or in different directions. For example, the first light source 423a and the third light source 423c may be located to face each other. The first light source 423a and the third light source 423c may be located to overlap in the first direction (X-axis direction). In addition, the third light guide LG2 may be located between the first light source 423a and the third light source 423c. Accordingly, the third light guide LG2 may overlap the first light source 423a and the third light source 423c. In addition, the second light source 423b may be located between the first light source 423a and the third light source 423c. The first to third light source 423a to 423c may emit light toward the third light guide LG2. In addition, the second light source 423b may overlap the third light guide LG2 in the second direction. With this configuration,, the optical device 400 may have the light source device 420 in a compact form.

Further, each of the first light source 423a, the second light source 423b, and the third light source 423c may emit light with wavelengths or colors that are partially identical to or different from each other.. For example, the first light source 423a, the second light source 423b, and the third light source 423c each may emit red, green, or blue light.

The third light guide LG2 may include a second prism. The second prism serves as a reflective member and may, for example, include an X-prism. In an embodiment, the third light guide LG2 or the second prism may have a structure in which at least two or more prisms are combined. In addition, the third light guide LG2 may be a non-polarizing prism. That is, the third light guide LG2 may not perform polarization on the light emitted from the light source 423.

In addition, the second prism may include at least two or more coated surfaces (reflective members or reflective sheets). One of the at least two or more coated surfaces may reflect light of a first wavelength and light of a second wavelength, and transmit light of a third wavelength. That is, the coated surface may reflect light of a predetermined wavelength band. Accordingly, for light emitted from each of the plurality of light sources 423, each light within a desired wavelength band may be reflected by the third light guide LG2. For example, the light after passing through the third light guide LG2 may be provided to the first light guide LG1 or the intermediate lens MO.

The light source lens 424 may be located adjacent to the light source 423. For example, the light source lens 424 may be provided as a plurality of light source lenses. The light source lenses 424 may be respectively located on paths of light emitted from the light sources 423.

In an embodiment, the light source lens 424 may be located between the third light guide LG2 and the light source 423. Further, the light source lenses 424 may be provided as a plurality of light source lenses. The light source lens 424 may be provided as a plurality of light source lenses and located between the third light guide LG2 and the light source 423. Alternatively, the light source lens 424 may be provided as a plurality of lenses, corresponding respectively to the plurality of light sources 423.

For example, the light source lens 424 may include a first light source lens 424a, a second light source lens 424b, and a third light source lens 424c. The first light source lens 424a may be located between the first light source 423a and the third light guide LG2. The second light source lens 424b may be located between the second light source 423b and the third light guide LG2. The third light source lens 424c may be located between the third light source 423c and the third light guide LG2.

Further, the first light source lens 424a, the second light source lens 424b, and the third light source lens 424c may each be provided as a plurality of lenses and be located on the first light source 423a, the second light source 423b, and the third light source 423c, respectively. For example, one of the plurality of first light source lenses 424a may be located on the first light source 423a and may be coupled to the light source assembly 421. In addition, another one of the plurality of first light source lenses 424a may be located between the one of the plurality of first light source lenses 424a and the third light guide LG2 and may be coupled to the housing 422.

In addition, the first light source lens 424a, the second light source lens 424b, and the third light source lens 424c may each include a collimating lens or collimator.

Further, a substrate 425 connected to the light source 423 may be disposed in the light source assembly 421. The substrate 425 may be provided as at least one substrate corresponding to the light sources 423. For example, a plurality of substrates 425 may include a first substrate 425a, a second substrate 425b, and a third substrate 425c. As described above, the plurality of substrates 425 may be provided as a single integrated substrate or as a plurality of substrates corresponding to the number of light sources.

In addition, the substrate 425 may be electrically connected to the control unit or processor in the frame (or the display unit) described above. Accordingly, the substrate 425 may include a connector for communication with an external device or a device connected thereto. Furthermore, the substrate 425 may be disposed outside the light source 423 to dissipate heat generated by the light source to the outside. Thus, the reliability of the light source device 420 may be improved.

The intermediate lens MO may be located between the opening 422h and the third light guide LG2. In addition, the intermediate lens MO may be located between the first light guide LG1 and the third light guide LG2.

The intermediate lens MO may include a plurality of lenses. For example, the intermediate lens MO may include a first intermediate lens MO1 and a second intermediate lens MO2. However, as will be described below, the light reflected by the third light guide LG2 may be directly provided to the first light guide LG1 without the intermediate lens MO.

The first intermediate lens MO1 may include a first surface MO1s1 adjacent to the first light guide LG1 and a second surface MO1s2 corresponding to the first surface MO1s1. Light emitted from the light source 423 may pass through the third light guide LG2 and sequentially pass through the second surface MO1s2 and the second surface MO1s1.

The second surface MO1s2 may be convex toward the third light guide LG2. Alternatively, the second surface MO1s2 may be concave toward the first light guide LG1. Furthermore, the first surface MO1s1 may be convex or concave toward the third light guide LG2. For example, the first intermediate lens MO1 may have a meniscus shape. As described above, as the second surface MO1s2 is convex toward the third light guide LG2, light may be focused while passing through the intermediate lens MO. Accordingly, the uniformity of light provided to the light signal generation unit 430 may be improved. In other words, the light incident on the light signal generation unit 430 may be planar light. In addition, the uniformity of planar light may be improved. Accordingly, the accuracy or resolution of an image signal or image emitted to the display unit through the optical device 400 according to the embodiment may be improved.

The second intermediate lens MO2 may include a micro lens array (MLA). As a result, light passing through the third light guide LG2 may undergo partial planarization.

Furthermore, the second intermediate lens MO2 may have a size different from that of the third light guide LG2. In addition, the first intermediate lens MO1 may have a size different from that of the third light guide LG2. For example, the intermediate lens MO2 may be larger in size compared to the third light guide LG2.

Furthermore, the plurality of lenses L, the intermediate lens MO, and the light source lens 424 may be maintained in position by the spacers SP. For example, a plurality of spacers SP adjacent to the plurality of lenses L may present in the barrel 410. In addition, the plurality of spacers SP adjacent to the intermediate lens MO and the light source lens 424 may be disposed in the housing 422 or the light source assembly 421 of the light source device 420. In an embodiment, the plurality of spacers SP may be disposed on upper or lower sides of the above-described lenses to fix or maintain the positions of the lenses.

The second light guide PR may be located in the light source device 420. In addition, the second light guide PR may be located between the first light guide LG1 and the light source 423. The second light guide PR may be a polarization reflector. In addition, the second light guide PR may reflect specific light. In addition, the second light guide PR may perform only polarization, transmit polarized light, or refract light. That is, the second light guide PR may correspond to the lens. Furthermore, the second light guide PR may be coupled to the third light guide, which will be described below, or the third light guide may perform the above-described functions (e.g., the functions of reflecting specific light, performing only polarization, transmitting polarized light, or refracting light) of the second light guide.

In addition, the second light guide PR may be located at a front end of the first light guide LG1 to perform reflection for the polarized light. For example, the second light guide PR may perform reflection on light transmitted through the first light guide LG1. In addition, the second light guide PR may transmit light with a polarization angle corresponding to or identical to that of light, which is reflected by the first light guide LG1 and directed toward the light signal generation unit 430. In other words, the second light guide PR may transmit light with a polarization angle corresponding to the light reflected by the first light guide LG1, and may reflect light with a polarization angle corresponding to the light transmitted through the first light guide LG1. With this configuration, the light source device or optical device according to the embodiment may provide improved light efficiency.

In an embodiment, the second light guide PR may be located between the first light guide LG1 and the lens (the intermediate lens or the light source lens). Thus, the light efficiency may be improved by using birefringence that occurs in the lens (the intermediate lens or the light source lens). In other words, the light reflected by the second light guide PR may undergo birefringence, phase delay, or polarization in the lens (the intermediate lens or the light source lens). As described above, the polarized light passing through the lens (the intermediate lens or the light source lens) may be transmitted through the second light guide PR. For example, at least a portion of the polarized light passing through the lens (the intermediate lens or the light source lens) may be transmitted through the second light guide PR. Thus, the light efficiency of the light source device or optical device may be improved.

Furthermore, the light source 423 may emit unpolarized light. In addition, the second light guide PR may reflect light from the light source 423. Furthermore, the lens may perform phase delay on light. Accordingly, since there is no change in the path of light, the position or emission path of the light emitted from the optical device may remain unchanged by the second light guide PR. In other words, phenomena such as afterimages may be suppressed.

The light signal generation unit 430 may be located at the rear end of the barrel 410. The light signal generation unit 430 may overlap the lens L along the optical axis or in the first direction (X-axis direction).

The light signal generation unit 430 may convert the light, which is incident on and reflected by the first light guide LG1 and passes through the Nth lens, into a light signal including image information.

The light signal generation unit 430 may reflect the light (first polarized light) reflected by the first light guide LG1. The light signal generation unit 430 may generate the light signal that includes image information. That is, the light reflected by the light signal generation unit 430 may be light that includes the image information.

The light signal generation unit 430 may include a liquid crystal on silicon (LCoS) display device.

An LCoS display device may have a structure in which liquid crystal is inserted between a silicon wafer containing a complementary metal-oxide semiconductor (CMOS) array and an anti-reflection (AR) layer coated with a transparent electrode made of indium tin oxide (ITO).

In addition, an alignment layer may be formed on the wafer (silicon wafer) to establish initial alignment of the liquid crystal.

Furthermore, a reflective layer or reflective electrode, which is formed from an aluminum layer with a high optical reflectivity, may be located below the alignment layer. The reflective electrode may be located on the silicon wafer. In addition, a semiconductor array (CMOS array) may be formed on the silicon wafer. In addition, such a semiconductor array may enable the transmission of data signals through a panel.

The light signal generation unit 430 may reflect at least a portion of incident light depending on the operation. In addition, the light signal generation unit 430 may reflect light incident from a planar light source for each pixel. Further, the intensity of the reflected light may also be adjusted according to the degree of modulation. For example, the light signal generation unit 430 may partially modulate the first polarized light into the second polarized light. Accordingly, the light modulated into the second polarized light may pass through the first light guide LG1 and the first lens L1 and be provided to the display unit.

That is, the light signal generation unit 430 may modulate retardation of the modulated light, i.e., polarized light. The light signal generation unit 430 may perform retardation on the first polarized light in various ways. That is, an electric field may be formed by adjusting a voltage for each pixel (controlling of an electrode voltage). In addition, the degree of twist in the liquid crystal may also be adjusted according to the controlled voltage. For example, at the maximum voltage, the light reflected by the light signal generation unit 430 may be entirely reflected by the first light guide LG1. In addition, at the minimum voltage, the light reflected by the light signal generation unit 430 may be entirely transmitted through the third light guide LG1. However, the light signal generation unit 430 may operate in the opposite manner depending on the electric field. In addition, when a medium level of voltage is applied, some light may pass through the first light guide LG1. That is, the intensity (e.g., brightness) of light provided to the display unit may be at a medium level.

The light signal thus generated by the light signal generation unit 430 may be transmitted to the first lens L1 through the Nth lens Ln and the first light guide LG1. Furthermore, at least a portion of the light signal generated by the light signal generation unit 430 may pass through the first lens L1 and be incident on the display unit.

In addition, a transparent member 440 may be further disposed between the light signal generation unit 430 and the Nth lens Ln (or the first light guide). The transparent member 440 may be glass. The transparent member 440 may be coupled to the barrel 410 or the cover CV. Furthermore, the transparent member 440 may be located on the light signal generation unit 430. Thus, the inflow of foreign substances into the light signal generation unit 430 may be easily blocked. In addition, the transparent member 440 may have a size identical to or different from that of the light signal generation unit 430. Furthermore, the transparent member 440 may overlap at least a portion of the light signal generation unit 430 along the optical axis or in the first direction (X-axis direction).

Referring further to FIG. 24A, the light La, Lb, and Lc emitted from the respective light sources 423 of the light source device 420 may pass through the light source lens 424, the third light guide LG2, and the intermediate lens MO. For example, the first light La, the second light Lb, and the third light Lc emitted respectively from the first to third light sources 432a to 432b may be emitted in the same direction from the third light guide LG2.

For example, the third light guide LG2 may include a first coated surface LG2a and a second coated surface LG2b. As described above, one of the at least two or more coated surfaces may reflect some of the light of the first wavelength, the light of the second wavelength, and the light of the third wavelength. For example, the first wavelength includes a wavelength band of red light. The second wavelength includes a wavelength band of green light. The third wavelength includes a wavelength band of blue light.

In addition, the first coated surface LG2a may reflect the first light La or the light of the first wavelength. That is, the first coated surface LG2a may transmit the second light Lb and the third light Lc. In other words, the first coated surface LG2a may transmit the light of the second wavelength and the light of the third wavelength.

The second coated surface LG2b may reflect the second light Lb or the light of the second wavelength. The second coated surface LG2b may transmit the first light La and the third light Lc. In other words, the second coated surface LG2b may transmit the light of the first wavelength and the light of the third wavelength.

Thus, the first light La from the third light guide LG2 may be reflected by or incident on the intermediate lens MO or the opening OP. In addition, the second light Lb from the third light guide LG2 may be reflected by or incident on the intermediate lens MO or the opening OP. In addition, the third light Lc from the third light guide LG2 may be reflected by or incident on the intermediate lens MO or the opening OP.

Accordingly, the light IL (or La, Lb, or Lc) emitted from the light source 423 may be incident on the first light guide LG. At this time, the light incident on the first light guide LG may be first incident light IL.

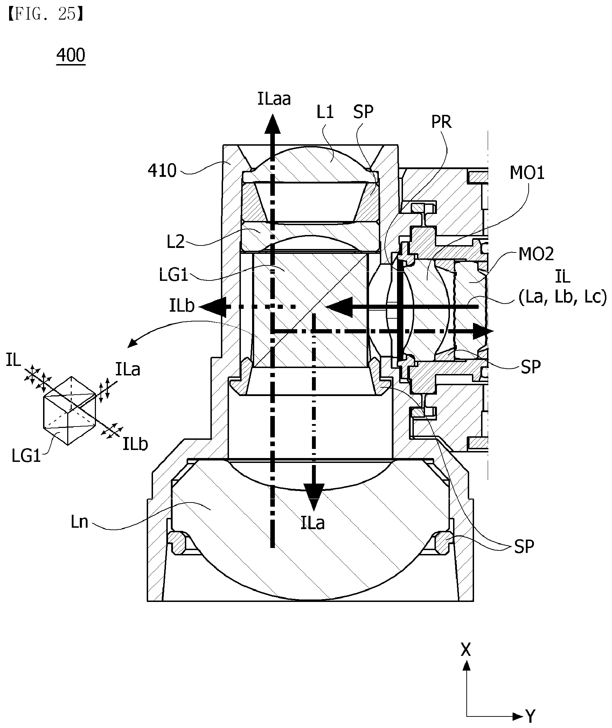

Referring further to FIG. 25, the first incident light IL may be partially reflected by and partially transmitted through the first light guide LG1. That is, the first light guide LG1 may reflect first polarized light ILa of the first incident light IL and transmit second polarized light ILb of the first incident light IL. For example, the first polarized light ILa and the second polarized light ILb may each correspond to a different one of S-polarized light and P-polarized light. Accordingly, the first polarized light ILa, which is a portion of the first incident light IL, may be provided to the light signal generation unit 430 through the Nth lens Ln. In addition, the second polarized light ILb may be absorbed by the barrel 410 or provided to the additional hole 410h.

At this time, the light source device or optical device according to the embodiment includes the second light guide PR, and the second polarized light ILb may be reflected by the second light guide PR. For example, the second polarized light ILb may be at least partially reflected by the second light guide PR. In other words, due to the second light guide PR, the amount of the second polarized light ILb transmitted through the first light guide LG1 may be reduced, and the amount of first reflected polarized light ILaa, which will be described below, may be increased. That is, the light efficiency of the optical device 400 may be improved.

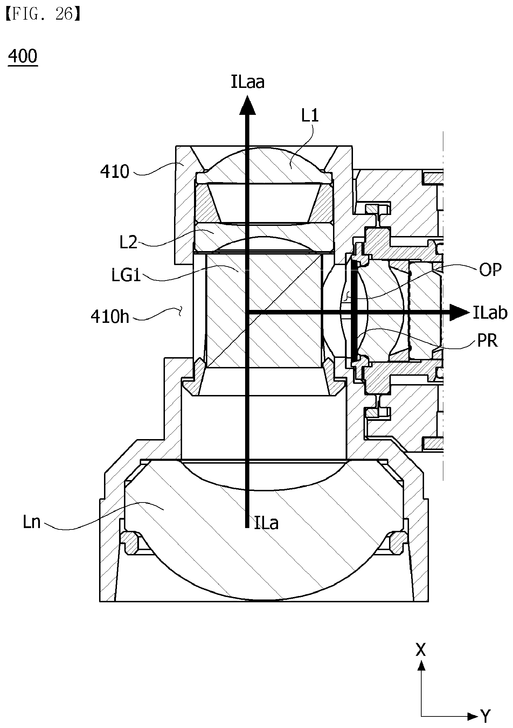

Referring further to FIG. 26, as described above, the light signal generation unit 430 may reflect the first polarized light ILa by adjusting a voltage. In the embodiment, the first polarized light ILa reflected by the light signal generation unit 430 will be described hereinafter as reflected polarized light.

In this manner, the first light guide LG1 may reflect at least a portion of the incident light or light IL, which is emitted from the light source 423 and incident on the first light guide, to the Nth lens (or the light signal generation unit). That is, the reflected polarized light may be at least partially reflected by the first light guide LG1. However, as described above, depending on the voltage applied by the light signal generation unit 430, the reflected polarized light may be entirely reflected by or transmitted through the first light guide LG1. Hereinafter, the description will be made based on the case in which the reflected polarized light is at least partially transmitted through the first light guide LG1.

The reflected polarized light may include the first reflected polarized light ILaa, which is transmitted through the first light guide LG1, and second reflected polarized light ILab that is reflected by the first light guide LG1. As described above, the intensity of the first reflected polarized light ILaa, that is, the degree of transmission of the reflected polarized light, may be adjusted in response to the image provided to the display unit.

In addition, the second reflected polarized light ILab may be transmitted through the second light guide PR. In addition, the second reflected polarized light ILab may be polarized at a predetermined angle through the lens (the intermediate lens or the light source lens). Thus, the second reflected polarized light ILab may move again to the second light guide PR after being partially polarized and reflected by the lens (the intermediate lens or the light source lens). In this case, the second reflected polarized light ILab may be transmitted through the second light guide PR and reflected by the first light guide LG1. As a result, the light efficiency may be further improved.

Furthermore, the optical device 400 according to the embodiment may further include a display unit, which is disposed in front of the first lens L1 and configured to display a light signal including image information transmitted to the first lens L1 as a video. In other words, the optical device 400 may be a structure integrally formed with the display unit described above. However, hereinafter, the optical device 400 will be described based on the structure being separated from the display unit.

Furthermore, in a modified example, as shown in FIG. 25B, the barrel 410 may further include an additional hole 410h in a side surface thereof. For example, the second polarized light may be provided to the additional hole 410h. The description of still another embodiment described above may be equally applied to descriptions of modified examples to be described below.

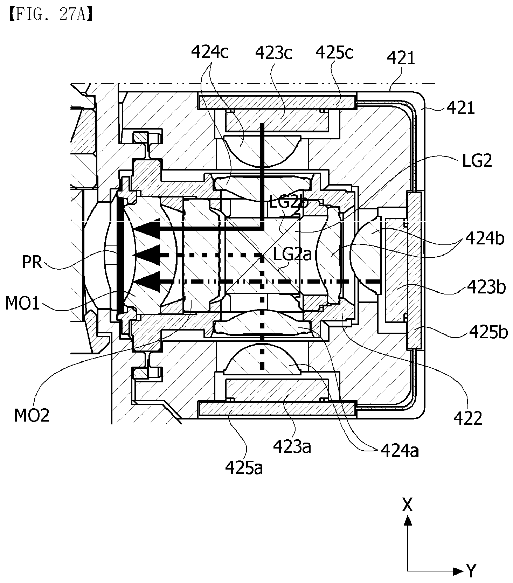

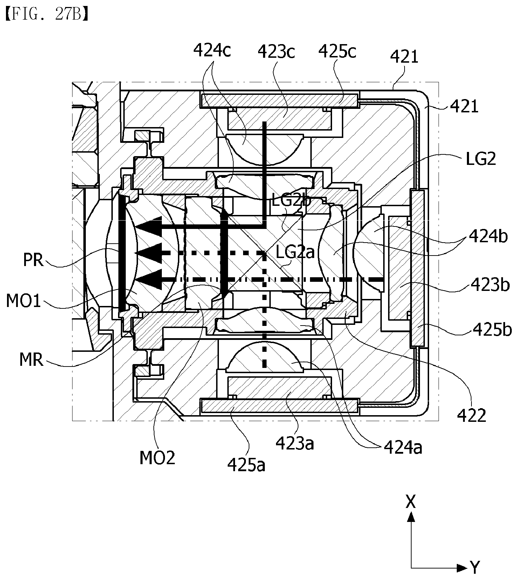

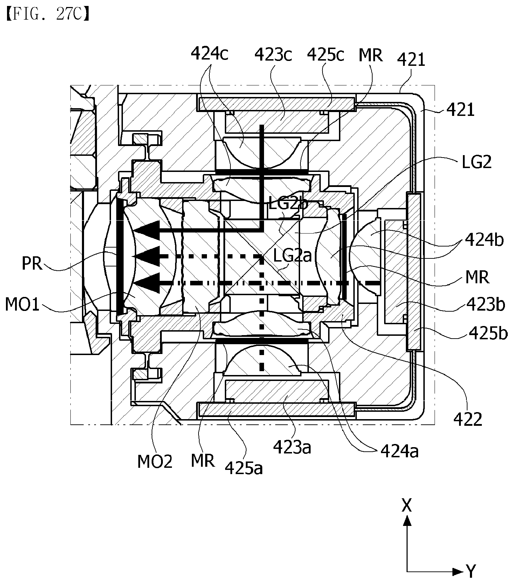

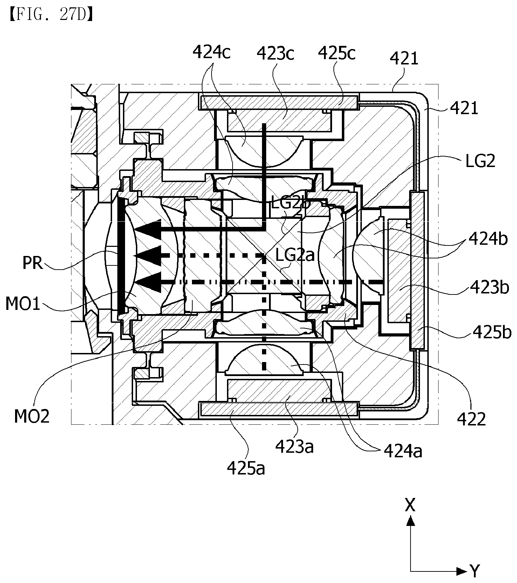

FIG. 27A is a cross-sectional view of a light source device in an optical device according to yet another embodiment, FIG. 27B is a modified example of FIG. 27A, FIG. 27C is another modified example of FIG. 27A, and FIG. 27D is still another modified example of FIG. 27A.

The descriptions of the optical device and the components of the optical device according to the embodiments described above, with the exception of the description of the various embodiments and modified examples to be described below, may be equally applicable.

Referring to FIG. 27A, as described above, the second light guide PR may be located in the light source device 420. In addition, the second light guide PR may be located between the first light guide LG1 and the light source 423. In addition, the second light guide PR may be located at the front end of the first light guide LG1 to perform reflection for the polarized light. For example, the second light guide PR may perform reflection on light transmitted through the first light guide LG1. In addition, the second light guide PR may transmit light with a polarization angle corresponding to or identical to that of light, which is reflected by the first light guide LG1 and directed toward the light signal generation unit 430. In other words, the second light guide PR may transmit light with a polarization angle corresponding to the light reflected by the first light guide LG1, and may reflect light with a polarization angle corresponding to the light transmitted through the first light guide LG1. With this configuration, the light source device or optical device according to the embodiment may provide improved light efficiency.

Furthermore, in the present embodiment, the second light guide PR may be located between the first light guide LG1 and the lens (the intermediate lens or the light source lens). At this time, the second light guide PR may be in contact with the lens. For example, one surface of the second light guide PR may be in contact with the lens. In an embodiment, the second light guide PR may be in contact with the intermediate lens MO. Thus, light converged or focused through the intermediate lens MO may be reflected. That is, light efficiency through the optical device or light source device may be maximized.

Referring to FIG. 27B, the light source device 400 according to the present embodiment may include a birefringent member MR. The birefringent member MR may be made of various materials that provide a birefringence phenomenon. For example, the birefringent member MR may be made of a transparent material through which light can be transmitted. In addition, the birefringent member MR may provide the phenomenon of stress birefringence. The birefringent member MR may provide only phase delay for incident light. The birefringent member MR may, for example, have layers or regions each with a different material density. Thus, the birefringent member MR can provide phase delay. The description for the birefringent member MR may be equally applied to other embodiments and modified examples.

Furthermore, the birefringent member MR may be located in the housing 422 of the light source device 400. For example, the birefringent member MR may be located between the second light guide PR and the light source 423. In the present embodiment, the birefringent member MR may be located between the second light guide PR and the third light guide LG2. In addition, the birefringent member MR may be located between the intermediate lens and the third light guide LG2. Thus, the birefringent member MR may efficiently perform polarization on collected light. In other words, birefringence may be easily performed with one birefringent member MR.

Alternatively, as shown in FIG. 27C, the birefringent member MR may be located between the second light guide PR and the light source lens 424. At this time, the light source lens 424 may be disposed between the light source 423 and the second light guide PR. Furthermore, the description of the light source lens 424 may also be applied hereinafter in the same manner.

In addition, the birefringent member MR may be located between the intermediate lens MO and the light source lens 424. In addition, the birefringent member MR may be located between the third light guide LG2 and the light source lens 424. Further, the birefringent member MR may be located between the third light guide LG2 and the light source 423.

Furthermore, as an additional example, the birefringent member MR may be located between the light source lens 424 and the light source 423. Accordingly, the light source lens 424 may be disposed between the birefringent member MR and the second light guide PR.

Thus, the birefringent member MR may be disposed between the light source lens 424 and the light source 423, or between the second light guide PR and the light source lens 424.

Alternatively, as shown in FIG. 27D, the birefringent member MR may be located on an inner side surface of the housing 422. In addition, the birefringent member MR may be located on an inner side surface of the light source assembly 421. Accordingly, the birefringent member MR may perform phase delay on light reflected by the second light guide PR. Thus, phase-delayed or polarized light may be transmitted through the second light guide PR and reflected by the first light guide. Accordingly, the light source device or optical device may provide improved light efficiency.

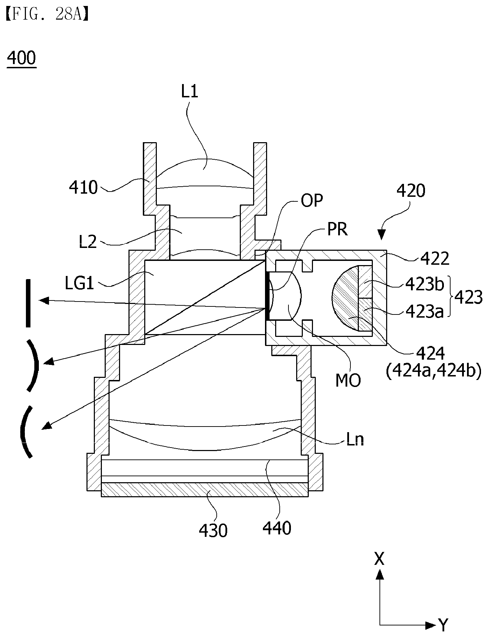

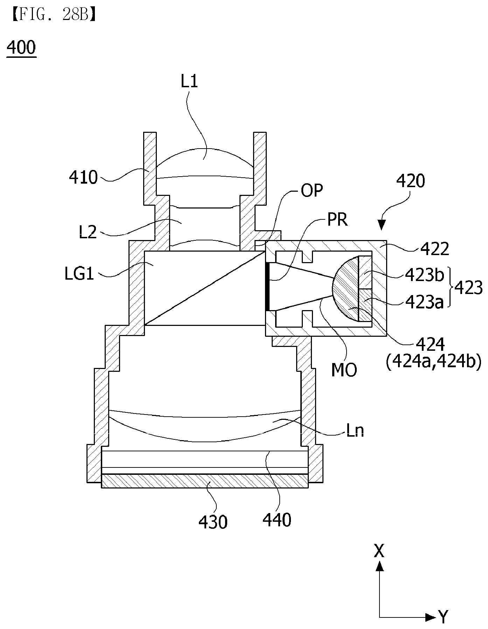

FIG. 28A is a cross-sectional view of a light source device in an optical device according to yet another embodiment, and FIG. 28B is a modified example of FIG. 28A.

Referring to FIG. 28A, the optical device 400 according to yet another embodiment may include only the first light guide LG1. The third light guide and the third light guide described above are not present in the light source device 420. The details described in each embodiment of the present specification may be applied, except for details described below in the present embodiment.

In addition, the light source 423 may be provided as at least one light source. Furthermore, the intermediate lens MO may be located between the light source 423 and the first light guide LG1.

For example, one light source 423 may provide only one light to the display unit. In cases in which only information is provided to the user, the light source device may have only one light source. In addition, the light source 423 may emit two lights. For example, the two lights may be any two of red, green, and blue. Alternatively, the two lights may also include white light.

Further, the intermediate lens MO may be disposed in the housing 422 of the light source device 420. The intermediate lens MO may be located between the light source 423 and the first light guide LG1.

Furthermore, the light source lens 424 may be disposed on the light source 423. Accordingly, the light source lens 424 may be located between the light source 423 and the intermediate lens MO. Further, the light source lens 424 may be located between the light source 423 and the first light guide LG1. In addition, the first light guide LG1, the intermediate lens MO, the light source lens 424, and the light source 423 may overlap in the second direction (Y-axis direction).

The light source lens 424 may be located on each of the two light sources 423. Further, the light source lens 424 may be provided as a single lens and may be located over two light sources 423.

In addition, as an additional example, the intermediate lens MO may not be disposed in the housing 422 of the light source device 420. In addition, the light source lens 424 may be disposed on the light source 423. Thus, the light source lens 424 may be located between the light source 423 and the first light guide LG1. In addition, the first light guide LG1, the light source lens 424, and the light source 423 may overlap in the second direction (Y-axis direction).

In addition, the light source lens 424 may be located on each of the two light sources 423. Further, the light source lens 424 may be provided as a single lens and may be located over two light sources 423.

Furthermore, the second light guide PR may have various shapes. The second light guide PR may have a shape that is convex or concave toward the first light guide LG1. Alternatively, the second light guide PR may have a flat shape. The second light guide PR may have various shapes corresponding to the shapes and functions of the light source 423, the intermediate lens M, and the light source lens 424 to increase light efficiency.

In addition, the second light guide PR may be spaced apart from the lens (the intermediate lens or the light source lens). In addition, the second light guide PR may be in contact with the lens (the intermediate lens or the light source lens). With this configuration, a reflection efficiency for the light transmitted through the lens may be improved.

In addition, referring further to FIG. 28B, the lens (the intermediate lens or the light source lens) may be disposed between the second light guide PR and the light source. At this time, the lens (the intermediate lens or the light source lens) may be spaced apart from or in contact with the second light guide PR as described above. In addition, the lens (the intermediate lens or the light source lens) may be spaced apart from or in contact with the light source 423. Furthermore, the lens (the intermediate lens or the light source lens) may extend in the second direction to come into contact with the light source 423 or the second light guide PR. For example, the lens (the intermediate lens or the light source lens) may be in contact with both the light source 423 and the second light guide PR. Accordingly, the light efficiency may be further maximized.

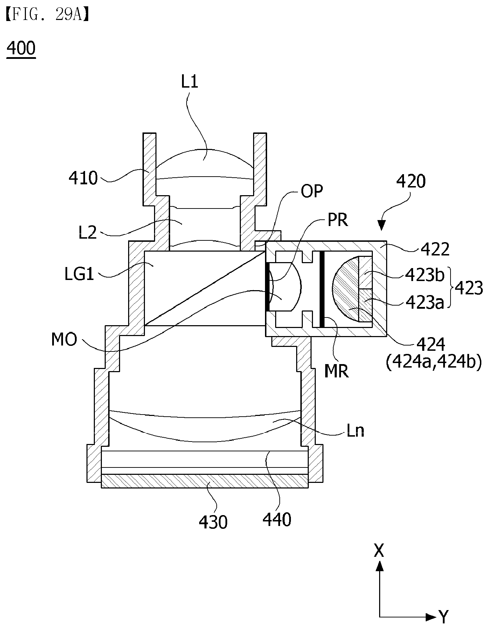

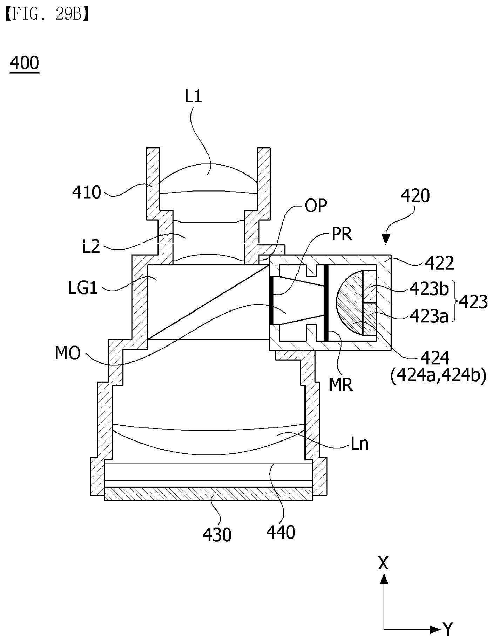

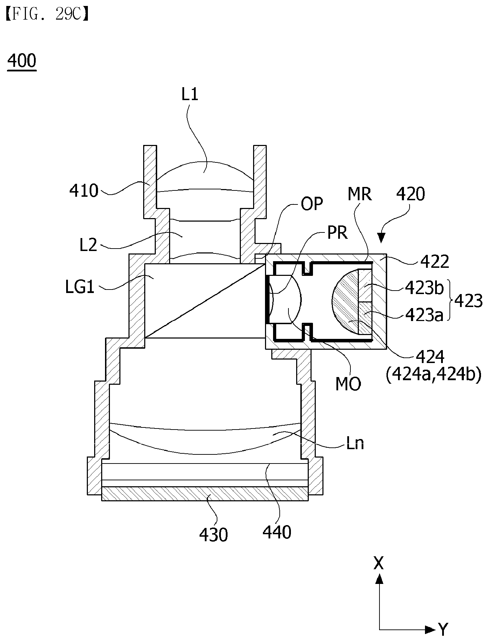

FIG. 29A is a cross-sectional view of a light source device in an optical device according to yet another embodiment, FIG. 29B is a modified example of FIG. 29A, and FIG. 29C is another modified example of FIG. 29A.

Referring to FIG. 29A, in the optical device according to yet another embodiment, the light source device may include the second light guide PR and the birefringent member MR as described above.

At this time, the birefringent member MR may be disposed between the second light guide PR and the light source 423. In addition, the birefringent member MR may be disposed between the second light guide PR and the light source lens 424. In addition, the intermediate lens MO may be disposed between the second light guide PR and the birefringent member MR.

In addition, the intermediate lens MO may be disposed between the second light guide PR and the birefringent member MR. The intermediate lens MO or the light source lens 424 may be in contact with the birefringent member MR. As shown in FIG. 29B, the intermediate lens MO may extend in the second direction to come into contact with the second light guide PR or the birefringent member MR.

Furthermore, as shown in FIG. 29C, the birefringent member MR may be located on an inner side surface of the housing 422 in the light source device 420. At this time, the intermediate lens MO may be formed in various shapes as described above.

Further, as an additional example, the above-described birefringent member MR may be located between the light source 423 and the second light guide PR. For example, the birefringent member MR may be located between the lens (the intermediate lens or the light source lens) and the second light guide PR. As a result, the efficiency of generating polarization may be increased.

## Claims

1. An optical device comprising:
a barrel on which an outer lens is disposed;
a light guide disposed in the barrel;
a lens connected to the light guide; and
a light source configured to emit light to the light guide,
wherein a distance between the light guide and the lens is less than a distance between the light source and the lens.

2. The optical device of claim 1, wherein the light guide is in contact with the lens.

3. The optical device of claim 1, wherein the distance between the lens and the light source is less than a length of the light guide.

4. The optical device of claim 1, wherein the number of the lenses corresponds to the number of the light sources.

5. The optical device of claim 1, comprising:
a first spacer in contact with the outer lens; and
a second spacer in contact with the light guide.

6. The optical device of claim 5, wherein a size of the second spacer is greater than a size of the light guide, and less than a sum of the size of the light guide and a size of the lens.

7. The optical device of claim 5, wherein a size of the second spacer is greater than a sum of a size of the lens and a size of the light guide.

8. The optical device of claim 1, wherein the light guide includes at least one prism.

9. The optical device of claim 1, wherein the light guide includes an X-prism.

10. The optical device of claim 1, comprising a housing surrounding the barrel,
wherein the light source is disposed in the housing.
